# EUROPÄISCHE PATENTSCHRIFT

(11) **EP 0 783 658 B1**
(45) Veröffentlichungstag und Bekanntmachung des Hinweises auf die Patenterteilung: **18.04.2001**
(21) Anmeldenummer: 95931077.2
(22) Anmeldetag: 27.09.1995
(51) Int. Cl.: F25B 47/02, F25B 41/06, B01D 53/26

(54) **VERFAHREN UND VORRICHTUNG ZUM KÜHLEN VON GASEN**
METHOD AND DEVICE FOR COOLING GASES
PROCEDE ET DISPOSITIF DE REFROIDISSEMENT DE GAZ

(30) Priorität: 29.09.1994 AT 185494
(43) Veröffentlichungstag der Anmeldung: 16.07.1997
(60) Teilanmeldung: 00116252.8
(73) Patentinhaber: Gossler, Ewald, 4813 Altmünster (AT)
(72) Erfinder: Gossler, Ewald, 4813 Altmünster (AT)
(74) Vertreter: Secklehner, Günter, Dr.
(86) Internationale Anmeldenummer: AT9500187
(87) Internationale Veröffentlichungsnummer: WO9610156

(56) Entgegenhaltungen:
- CH-A- 234 745
- DE-A- 2 006 316
- DE-A- 2 536 398
- DE-A- 2 639 339
- DE-A- 2 734 358
- DE-A- 2 948 520
- DE-A- 3 637 071
- DE-C- 958 845
- US-A- 4 905 476

## Beschreibung

Die Erfindung betrifft ein Verfahren und eine Vorrichtung zum Kühlen von Gasen, wie sie im Oberbegriff der Patentansprüche 1 und 22 beschrieben sind. Ein solches Verfahren und eine solche Vorrichtung sind z.B. aus der US-A-4 905 476 bekannt.

Es ist bereits ein Verfahren und eine Vorrichtung zum Verdichten von Gasen bekannt - gemäß DE-A1-36 37 071 -, bei dem das durch den Verdichter angesaugte Gas vorher mit einem Kältetrockner in einer Kühlstrecke unter 0°C abgekühlt wird. Die vom Verdichter angesaugte Luft wird dabei abwechselnd über einen von zwei parallel geschalteten Kältetrocknern angesaugt. Während mit dem einen das angesaugte Gas abkühlt wird, wird mit dem anderen das bei der Abkühlung des angesaugten Gases in Form von Eis anfallende Kondensat ausgeschieden. Dazu wird dem abzutauenden Kältetrockner anstelle eines unterkühlten Kältemittels das heiße gasförmige Kältemittel zugeführt, welches den in diesem Kältetrockner angeordneten Wärmetauscher durchströmt und dadurch erhitzt, sodaß das an dem Wärmetauscher bzw. dem Kältetrockner anhaftende Eis abtaut. Wird bei dem aus dem Wärmetauscher ausströmenden Kältemittel eine Temperatur festgestellt, die im Bereich von größer + 0°C liegt, so wird die Zufuhr von heißem Kältemittel zum Wärmetauscher unterbrochen und der Wärmetauscher dann wieder mit expandiertem kalten Kältemittel durchströmt, wodurch es zu einer Vorkühlung des Wärmetauschers kommt. Ist eine gewünschte Mindestbetriebstemperatur des Wärmetauschers, beispielsweise - 10°C, erreicht, dann kann die vom Verdichter benötigte Luft bereits über den vorgekühlten Wärmetauscher wieder angesaugt werden, worauf der andere Wärmetauscher abgetaut wird. Durch dieses wechselweise Kühlen und Abtauen der beiden Wärmetauscher ist eine kontinuierliche Ansaugung von unterkühltem Gas für den Verdichter möglich, wobei auch durch die Vorkühlung Schäden durch Eisteilchen, die mit der angesaugten Luft mitgerissen werden können, im Verdichter vermieden werden können. Das beim Abtauen der Wärmetauscher aus deren Auslaß austretende abgekühlte Kühlmittel wird über Leitungen einem Flüssiggastank unmittelbar nachdem dem Kältemittelverdichter nachgeschalteten Kondensator zugeführt und dort mit dem bereits vorab gekühlten Kältemittel vermischt. Durch die Rückführung des aus dem abzutauenden Wärmetauscher austretenden Kältemittels in den Flüssiggastank ist der Wirkungsgrad derartiger Verfahren und Vorrichtungen nicht immer zufriedenstellend.

Der vorliegenden Erfindung liegt die Aufgabe zugrunde, den Gesamtwirkungsgrad eines Verfahrens und einer Vorrichtung zum Kühlen von Gasen zu verbessern.

Diese Aufgabe der Erfindung wird durch die Merkmale des Patentanspruches 1 gelöst. Vorteilhaft ist bei dieser Lösung, daß das aus dem abzutauenden Wärmetauscher des Kältetrockners austretende Kältemittel in die Kältemittelleitung unmittelbar vor dem die Ansaugluft unterkühlenden Wärmetauscher des anderen Kältetrockners zugeführt wird, sodaß durch die Vergasung des in flüssiger Form aus dem abzutauenden Wärmetauscher austretenden Kältemittels, bedingt durch den Druckabfall und den Energiebedarf zur Umwandlung des Kältemittels vom flüssigen in den gasförmigen Zustand, der Umgebung Wärme entzogen wird, sodaß dieses zuvor zur Abtauung des abzutauenden Wärmetauschers benutzte Kältemittel nunmehr zur zumindest teilweisen Abkühlung des vom Verdichter angesaugten Gases verwendet werden kann. Die exakte Regelung der Ansaugtemperatur des durch den Verdichter angesaugten Gases kann über das, dem zur Unterkühlung des Gases eingesetzten Wärmetauschers vorgeordnete Expansionsventil gesteuert werden, wodurch in überraschender Weise die während des Abkühlvorganges in dem Wärmetauscher sich verändernden Druck- und Temperaturverhältnisse im Kältemittel mit der ohnehin vorhandenen Regelung ausgeglichen werden können.

Durch die Weiterbildung nach Patentanspruch 2 wird mit Vorteil erreicht, daß nicht nur die Wärmeabgabe im Wärmetauscher kontrolliert, sondern gleichzeitig auch das Einhalten eines gewünschten Überhitzungsgrades des Kältemittels überwacht werden kann.

Durch ein Vorgehen gemäß Patentanspruch 3 wird sichergestellt, daß dieser Überhitzungsgrad des Kältemittels auch während des laufenden Betriebs beibehalten werden kann.

Durch den weiteren vorteilhaften Verfahrensschritt nach Patentanspruch 4 bedarf das Einbringen der vom abzutauenden Wärmetauscher kommenden Kältemittelmenge keiner zusätzlichen Regelung und Steuerung und ist damit ein weiterer Druckverlust und somit Energieverlust ausgeschaltet.

Vorteilhaft ist auch ein Vorgehen nach Patentanspruch 5, da dadurch die von dem bzw. den abzutauenden Wärmetauschern kommende verflüssigte Kältemittelmenge gleich oder kleiner ist, als die durch das Expansionsventil geregelte und über den Kondensator abgekühlte Kältemittelmenge, und somit über die Regelung des Expansionsventils trotz Mitverwendung der von den abzutauenden Wärmetauschern ungeregelt zugeführten Kältemittelmenge eine eindeutige Steuerung und Regelung der abzukühlenden Temperatur möglich ist.

Eine problemlose Zumischung des vom abzutauenden Wärmetauscher zugeführten Kältemittels ist durch die Maßnahmen nach Patentanspruch 6 erreichbar.

Eine verfeinerte Steuerung des Wärmeübergangs im Wärmetauscher kann durch die Vorgangsweise nach Patentanspruch 7 erreicht werden.

Einen überraschenden Zusatzvorteil erbringen aber auch die Maßnahmen nach Patentanspruch 8, da dadurch der Vereisungsgrad an dem in der Kältezone angeordneten Wärmetauscher herabgesetzt und somit die Umschaltung zwischen den parallel laufenden Ansaugwegen seltener erfolgen muß, wodurch aufgrund des geringeren Energiebedarfs durch das Abtauen eine höhere Wirtschaftlichkeit erzielbar ist. Dazu kommt, daß durch die Aufteilung in eine Klimazone und eine Kältezone in der Klimazone die Oberflächen der Wärmetauscher durch den Niederschlag des aus dem Gas ausgeschiedenen Kondensates naß sind und durch diese nassen Oberflächen diese Wärmetauscher als Partikelfilter, insbesondere Schmutzfilter, eingesetzt werden können, wobei diese Verschmutzungen mit dem Abfließen des Kondensates regelmäßig während des fortlaufenden Betriebes aus dem Wärmetauscher bereits abgeleitet werden.

Durch eine weitere Vorgangsweise nach Patentanspruch 9 kann eine bevorzugte Aufteilung des Abkühlvorganges des angesaugten Gases und ein verfahrensablaufmäßiges vorteilhaftes Ausscheiden des Kondensates erzielt werden. Vorteilhaft ist bei dieser Lösung aber vor allem, daß die Wasserdampfabfuhr in der Klimazone mit einem wesentlich geringeren Energieaufwand erfolgen kann, als wenn die Abkühlung des Gases mit einem einzigen Wärmetauscher um eine Temperaturdifferenz von 40 - 50°, beispielsweise auf - 40°, erfolgt. Durch die Aufteilung auf die Klima- und die Kühlzone wird bei Verwendung getrennter Kältemittelverdichter für jede der beiden Zonen bei einer ca. 10-fachen Kälteleistung gegenüber der Abkühlung in einem einzelnen Wärmetauscher nur eine 2,5-fache Erhöhung der Leistungsaufnahme bei den Kältemittelverdichtern erforderlich. Damit wird eine erhebliche Verbesserung der Wirtschaftlichkeit bei Aufteilung der Kühlung des Gases in eine Klima- und Kältezone erreicht.

Vorteilhaft ist auch eine Vorgangsweise nach Patentanspruch 10, da dadurch das Ausscheiden von mit dem angesaugten Gas mitgerissenen Partikeln, insbesondere Staub und Schmutz, einfach möglicher ist.

Ein höherer Wirkungsgrad beim Abkühlen und durch opitimierte Leitungslänge der Kältemittelleitungen im Wärmetauscher kann durch die Maßnahmen nach Patentanspruch 11 erzielt werden.

Eine exakte Verfahrenskontrolle ist mit den Maßnahmen nach Patentanspruch 12 möglich, da vor allem sichergestellt werden kann, daß über die feinfühlige Regelung das Kältemittel aus dem Wärmetauscher im gasförmigen Zustand austritt.

Mit einer anderen Verfahrensvariante gemäß Patentanspruch 13 kann eine energiebilanzmäßig günstige Steuerung des Kältemittelverdichters erzielt und eine höhere Betriebssicherheit erreicht werden.

Durch das vorteilhafte Vorgehen nach Patentanspruch 14 kann auch bei niederen Temperaturen des zur Verdichtung von der Umgebung angesaugten Gases eine einwandfreie Betriebssicherheit und ein ungestörter fortlaufender Betrieb der Verdichter erzielt werden, wodurch auch bei sehr niederen Ansaugtemperaturen bzw. einer starken Unterkühlung des angesaugten Gases ein rascher Wechsel zwischen den parallel verlaufenden Ansaugwegen aufgrund der raschen Abtauung der jeweils vereisten Wärmetauscher möglich ist.

Weitere vorteilhafte Verfahrensabläufe können durch die Maßnahmen gemäß den Patentansprüchen 15 bis 21 erzielt werden.

Die Aufgabe der Erfindung kann aber auch durch die eigenständige Lösung nach Anspruch 22 gelöst werden, wodurch mit der Vorrichtung sichergestellt werden kann, daß das aus dem Wärmetauscher ausströmende Kältemittel, über welches das Gas bzw. die Luft abgekühlt wurde, über den Drucktaupunkt erwärmt ist und somit ein kondensieren des zum Kältemittelverdichter rückströmenden Kältemittels zuverlässig verhindert ist.

Durch die Weiterbildung nach Patentanspruch 23 ist es in einfacher Weise möglich, eine Überhitzung des aus dem zur Kühlung des angesaugten Gases eingesetzten Wärmetauschers austretenden Kältemittels sicherzustellen.

Eine nahezu Echtzeit-Regelung des Betriebes der Vorrichtung kann durch die Merkmale nach Patentanspruch 24 erzielt werden.

Eine hohe Betriebssicherheit kann durch die Weiterbildung nach Patentanspruch 25 erreicht werden.

Vorteilhaft ist aber auch eine Ausbildung nach Patentanspruch 26, wodurch ein rasches Abtauen des Eisbelags vom Wärmetauscher ermöglicht wird.

Von Vorteil ist auch die Ausführungsvariante nach Patentanspruch 27, da dadurch eine stufenweise Abkühlung des angesaugten Gases und somit eine gezielte und rasche Abfuhr des im angesaugten Gas enthaltenen Kondensates möglich ist.

Bei einer Auslegung der Vorrichtung nach Patentanspruch 28 wird mit einem geringen gerätetechnischen Aufwand eine hohe Betriebssicherheit und eine gute Ausnützung der Kälteenergie zum Unterkühlen des angesaugten Gases erzielt.

Eine feinfühlige Regelung der Temperatur des angesaugten Gases und damit verbunden auch ein guter Wirkungsgrad der gesamten Vorrichtung kann durch die Ausbildung gemäß Patentanspruch 29 erzielt werden.

Die Erfindung wird im nachfolgenden anhand der in den Ausführungsbeispielen gezeigten Ausführungsvarianten näher beschrieben.

Es zeigen:
- Fig. 1: ein Blockschaltbild einer erfindungsgemäßen Vorrichtung zum Verdichten von Gasen in vereinfachter, schaubildlicher Darstellung;
- Fig. 2: ein Blockschaltbild der erfindungsgemäßen Vorrichtung zum Verdichten von Gasen mit zwei parallel zueinander angeordneten Kältetrocknern und einer Heißgasabtauung;
- Fig. 3: ein Blockschaltbild der erfindungsgemäßen Vorrichtung zum Verdichten von Gasen mit zwei parallel zueinander angeordneten Kältetrocknern und einer Heißgasabtauung;
- Fig. 4: ein Diagramm des Temperaturverlaufes der erfindungsgemäßen Vorrichtung;
- Fig. 5: ein Blockschaltbild einer anderen Ausführungsvariante der erfindungsgemäßen Vorrichtung in vereinfachter, schaubildlicher Darstellung;
- Fig. 6: ein Blockschaltbild einer weiteren Ausführungsform der erfindungsgemäßen Vorrichtung, wobei nur einer von mehreren Kältetrocknern dargestellt ist, der mehrere in Strömungsrichtung hintereinander angeordnete Wärmetauscher umfaßt, in vereinfachter, schaubildlicher Darstellung;
- Fig. 7: ein Blockschaltbild einer weiteren Ausführungsform der erfindungsgemäßen Vorrichtung;
- Fig. 8: ein Blockschaltbild einer weiteren Ausführungsform der erfindungsgemäßen Vorrichtung;
- Fig. 9: ein Blockschaltbild einer anderen Ausführungsvariante der erfindungsgemäßen Vorrichtung zum Verdichten von Gasen mit zwei parallel zueinander angeordneten Kältetrocknern und einer Heißgasabtauung;
- Fig. 10: ein Blockschaltbild einer Anlage, bei dem mehrere erfindungsgemäße Vorrichtungen zum Verdichten von Gasen zusammengeschaltet sind, in vereinfachter, schematischer Darstellung;
- Fig. 11: ein Blockschaltbild einer erfindungsgemäßen Anlage, bei der mehrere Kältetrockner auf der Druckseite eines Verdichters zusammengeschaltet sind, in vereinfachter, schematischer Darstellung;
- Fig. 12: ein Blockschaltbild einer anderen Ausführungsform der erfindungsgemäßen Vorrichtung in vereinfachter, schaubildlicher Darstellung.

In Fig. list eine Vorrichtung 1 zum Verdichten eines Gases 2, das schematisch durch Pfeile 3 angedeutet ist, gezeigt. Diese Vorrichtung 1 umfaßt einen Verdichter 4, wobei hierfür sowohl Schraubenverdichter als auch Kolbenverdichter oder Radialverdichter mit oder ohne Öleinspritzung Verwendung finden können, und zwei diesen vorgeordnete Kältetrockner 5, 6. Die beiden Kältetrockner 5, 6 sind über Ansaugleitungen 7, 8 an einem ansaugseitigen Ansaugstutzen 9 des Verdichters 4 angeschlossen. Zwischen einem Auslaß 10, 11 der Kältetrockner 5, 6 und den Ansaugleitungen 7, 8 sind luftdichte Verschlußklappen 12, 13 angeordnet, die über Antriebe 14, wie z.B. Zylinderkolbenanordnungen oder Elektromagnetanordnungen, aus der bei der Verschlußklappe 12 gezeigten geschlossenen Stellung in die bei der Verschlußklappe 13 gezeigte geöffnete Stellung verstellbar sind.

In jedem Kältetrockner 5, 6 ist zumindest ein Wärmetauscher 15, 16 angeordnet. Jeder Wärmetauscher 15, 16 ist mit einer Anschlußleitung 17, 18 bzw. einer Saugleitung 19, 20 eines Kältemittel-Kreislaufes verbunden. Das in den Saugleitungen 19, 20 aus dem Wärmetauscher 15, 16 kommende gasförmige Kältemittel wird insbesondere über ein Magnetventil 21, eine Saugleitung 22 von einem Kältemittelverdichter 23 angesaugt. Zur Steuerung bzw. Regelung der Vorrichtung 1 ist eine Steuervorrichtung 24 vorgesehen, an der die einzelnen Magnetventile 21 bzw. Antriebe 14 angeschlossen sind.

Das Kältemittel wird weiters vom Kältemittelverdichter 23 bzw. einem nachgeschalteten Kondensator über Druckleitungen 25, 26, verstell- oder regelbare Expansionsventile 27, 28, welche z.B. gleichzeitig auch als Sperrventil verwendet werden können, in die Anschlußleitungen 17, 18, also zum Eingang des Wärmetauschers 15, 16, befördert. Weiters ist es auch möglich, daß bei Verwendung von nicht absperrbaren Expansionsventilen 27, 28 vor bzw. nach diesen ein Magnetventil anzuordnen, um den Kältemittelkreis zu unterbrechen.

Weiters wird die Anschlußleitung 17 bzw. 18 über eine Bypaßleitung 29, 30 unter Zwischenschaltung eines Magnetventils 31, 32 für das Heißgas mit der Leitung zwischen dem Kältemittelverdichter 23 und dem Kondensator verbunden.

Zusätzlich weisen die Kältetrockner 5, 6 weitere Verschlußklappen 33 auf, die in geschlossenem Zustand zumindest gegenüber einem Eintritt von Gasen 2 aus Richtung eines Ansaugstutzens 34 gasdicht sind.

Weiters sind die Kältetrockner 5, 6 über eine Verbindungsleitung 35 miteinander verbunden. Diese Verbindungsleitung 35 verbindet die den Verschlußklappen 12, 13 gegenüberliegenden Öffnungen der Kältetrockner 5, 6. Die Verbindungsleitung 35 bzw. die Kältetrockner 5, 6 weisen einen Abfluß 36 auf, der auf der Ansaugseite der Kältetrockner 5, 6 und zur Abfuhr des Kondensates angeordnet ist. Während des Abkühlen des vom Verdichter 4 angesaugten Gases 2 bzw. beim Abtauen des während des Abkühlens durch die hohe Luftfeuchtigkeit entstandenen Eises, kann das Wasser des geschmolzenen Eises über den Abfluß 36 abgeführt werden. Desweiteren ist dieser Verbindungsleitung 35 eine Verschlußklappe 37 angeordnet, die bevorzugt, aber nicht zwingend, im geschlossenen Zustand zumindest gegenüber dem Eintritt von Gasen 2 aus Richtung des Ansaugstutzens 34 gasdicht ist.

Die Saugleitungen 19, 20 werden am Ausgang des Wärmetauschers 15, 16 jeweils vor den Magnetventilen 21 mit jeweils einer Rückleitung 38 und 39 verbunden, wobei die Rückleitung 38, die mit der Saugleitung 19 verbunden ist, ein gegen Rückströmungen aus der Anschlußleitung 18 wirkendes Rückschlagventil 40 zwischengeschaltet ist, damit die Rückleitung 38 mit der Anschlußleitung 18 verbunden werden kann, wogegen die Saugleitung 20 über die Rückleitung 39 und ein gegen Einströmung von Kältemittelgas aus der Anschlußleitung 17 wirksames Rückschlagventil 41 mit der Anschlußleitung 17 verbunden ist.

Das Verfahren zum Abkühlen eines zu verdichtenden Gases 2 gemäß der Erfindung läuft nun folgendermaßen ab:
Das zu verdichtende Gas 2 wird bei der dargestellten Vorrichtung 1 bei geöffneter Verschlußklappe 33 des Kältetrockners 5 durch den Verdichter 4 über den Ansaugstutzen 34 in den Kältetrockner 5 gesaugt. Das angesaugte Gas 2 passiert dann den Wärmetauscher 15, der zu dieser Zeit abgetaut, d.h. von dem als Eis angefallenen Kondensat befreit wird. Beim Vorbeistreichen der warmen Luft an dem Eis bzw. mit kaltem Tauwasser vom Eis beschlagenen Wärmetauscher 15 wird das angesaugte Gas 2 bereits abgekühlt und scheidet einen Teil der in dem Gas 2 in Form von Wasserdampf enthaltenen Feuchtigkeit aus.

Nachdem das angesaugte Gas 2 den Wärmetauscher 15 und die Verbindungsleitung 35 passiert hat, durchströmt das Gas 2 den auf die gewünschte Temperatur abgekühlten Wärmetauscher 16 und wird dabei auf die gewünschte vorgegebene Temperatur abgekühlt, worauf die noch in dem angesaugten Gas 2 in Form von Wasserdampf enthaltene Flüssigkeit ausgeschieden wird. Die ausgeschiedene Flüssigkeit setzt sich als Rauhreif bzw. Eis aufgrund der unter 0°C liegenden Temperaturen des Wärmetauschers 16 an dem Wärmetauscher 16 bzw. den Wänden des Kältetrockners 6 ab. Von dort tritt das unter 0°C, bevorzugt auf Temperaturen zwischen -10°C und -50°C, abgekühlte Gas in die geöffnete Verschlußklappe 13, die in beiden Richtungen gasdicht ausgebildet ist, zum ansaugseitigen Ansaugstutzen 9 des Verdichters 4.

Die Abkühlung des Wärmetauschers 16 erfolgt über ein Kältemittel. Dieses Kältemittel wird in dem Kältemittelverdichter 23 verdichtet und anschließend in einem nicht näher bezeichneten Kondensator abgekühlt, sodaß es in den flüssigen Zustand übertritt und dann über die Druckleitung 26 einem Expansionsventil 28 zugeführt wird. Bei der Expansion des Kältemittels entzieht das Kältemittel der Umgebung Wärme und kühlt den Wärmetauscher 16, je nach Menge des zugeführten Kältemittels, wobei die Regelung über die Expansionsventile 27 bzw. 28 mittels der Steuervorrichtung 24 erfolgt. Die Steuerung der einzelnen Magnetventile 21 der Expansionsventile 27, 28, der Verschlußklappen 12, 13, 33, 37 erfolgt über Steuerleitungen 42 bis 47.

Für die Kühlung des Wärmetauschers 15 ist dieser ebenfalls an dem, dem Kältemittelverdichter 23 nachgeordneten Kondensator über die Druckleitung 25 angeschlossen, in der das verflüssigte Kältemittel dem Expansionsventil 27 zugeführt wird, in welchem der Druckabfall zum Vergasen des Kältemittels stattfindet, und über eine Anschlußleitung 17 mit dem Wärmetauscher 15 verbunden ist. Die Rückführung des Kältemittels zum Kältemittelverdichter 23 erfolgt über die Saugleitung 19 und 22.

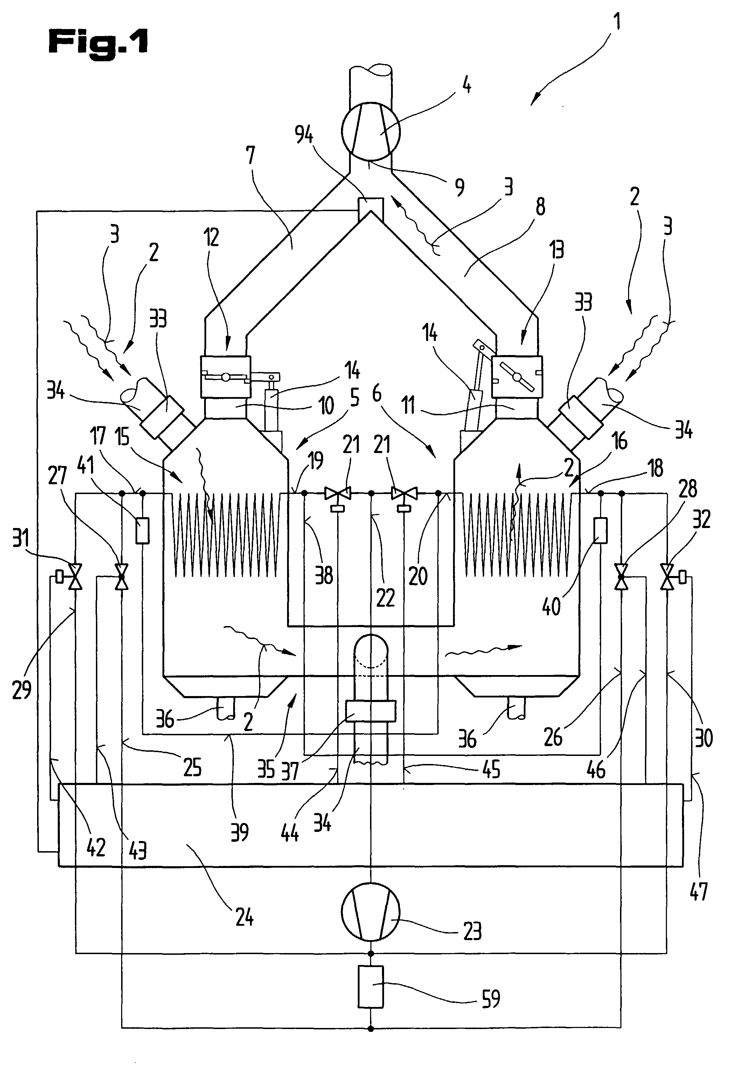

Bei dem in Fig. 1 dargestellten Betriebszustand wird nun das zu verdichtende Gas 2, beispielsweise Luft, gemäß den schematischen Pfeilen 3 über den Ansaugstutzen 34 im Bereich des Kältetrockners 5 angesaugt und über den Wärmetauscher 15, die Verbindungsleitung 35 in den Bereich des Kältetrockners 6 weitergeleitet. Anschließend durchströmt bzw. umspült das Gas 2 den Wärmetauscher 16 und tritt durch die Verschlußklappe 13 in die Ansaugleitung 8 ein, die das nunmehr entfeuchtete und unterkühlte Gas 2 dem Ansaugstutzen 9 des Verdichters 4 zuführt.

Bei dieser Betriebsweise ist, wie gezeigt, die in beiden Strömungsrichtungen luftdichte Verschlußklappe 12 ebenso geschlossen, wie die dem Kältetrockner 6 zugeordnete Verschlußklappe 33 und die in der Verbindungsleitung 35 angeordnete Verschlußklappe 37.

Durch das Abkühlen des Gases 2 im Kältetrockner 6 wird der Wärmetauscher 16 des Kältetrockners 6 vereist, d.h. daß dabei Wassertropfen vom angesaugten Gas 2 abgeschieden werden, sodaß nur trockenes Gas 2 vom Verdichter 4 angesaugt wird. Dies hat nun den Vorteil, daß Flüssigkeitsschläge am Verdichter 4 durch Ansammlungen von Wasser verhindert werden können und führt aber in überraschender Weise gleichzeitig zu einer Reinigung des angesaugten Gases 2, da sich Schwebebestandteile im angesaugten Gas 2 an den vereisten bzw. nassen Oberflächen des Wärmetauschers 16 abscheiden bzw. festgehalten werden und dann beim nachfolgenden Abtauen des Wärmetauschers 16 in den Abfluß ausgeschieden werden können.

Ein weiterer Vorteil dieser Unterkühlung des angesaugten Gases 2 liegt darin, daß die Betriebstemperatur der Verdichter 4 äußerst niedrig ist, sodaß es auch bei den Verdichtern 4 mit Öleinspritzung zu keiner Vergasung bzw. Verdampfung des Öles kommt und somit vermieden wird, daß sich das verdampfte Öl mit dem Gas 2 vermischt, da keine Feuchtigkeit mehr im Gas 2 enthalten ist. Dadurch können aber auch in Verbindung mit der starken Trocknung des Gases 2 durch die Flüssigkeitsausscheidung in den Wärmetauschern 15 bzw. 16 Vermischungen von Öl und Wasser nicht auftreten und werden die, sonst sehr schwer zu entsorgenden, Öl-Wasser Emulsionen verhindert.

Da jedoch bei zu starker Vereisung des Wärmetauschers 16 das angesaugte Gas 2 nicht mehr auf die gewünschte Temperatur abgekühlt werden kann, muß dieser vom Eis befreit werden, d.h. daß der Wärmetauscher 16 abgetaut werden muß, um eine ungestörte Versorgung des Ansaugstutzens 9 des Verdichters 4 mit getrocknetem und gekühltem Gas 2 zu ermöglichen. Dazu wird nun vorerst die Verschlußklappe 37 in der Verbindungsleitung 35 geöffnet, sodaß das vom Verdichter 4 benötigte Gas 2 nunmehr über den dieser Verschlußklappe 37 zugeordneten Ansaugstutzen 34 angesaugt wird. Gleichzeitig wird über die Steuervorrichtung 24 eine Abkühlung des Wärmetauschers 15 auf den gewünschten Betriebsbereich vorgenommen, indem flüssiges Kältemittel über die Druckleitung 25, das Expansionsventil 27 der Anschlußleitung 17 dem Wärmetauscher 15 zugeführt wird. Weiters wird die Verschlußklappe 33 des Kältetrockners 5 geschlossen. Ist eine ausreichende Abkühlung des Wärmetauschers 15 erzielt, so wird die Verschlußklappe 13 geschlossen und die Verschlußklappe 12 geöffnet. Daraufhin wird das zu verdichtende Gas 2 nunmehr über den Ansaugstutzen 34 vorbei an der Verschlußklappe 37 dem Kältetrockner 6 zugeleitet und durch diesen das Gas 2 abgekühlt und getrocknet und anschließend über die geöffnete Verschlußklappe 12 dem Ansaugstutzen 9 des Verdichters 4 zugeführt.

Daran anschließend oder gegebenenfalls auch gleichzeitig mit dem Öffnen der Verschlußklappe 12 und dem Schließen der Verschlußklappe 13 wird die Verschlußklappe 33 des Kältetrockners 6 geöffnet und gleichzeitig oder unmittelbar nach dem Öffnen der Verschlußklappe 33 die Verschlußklappe 37 in der Verbindungsleitung 35 geschlossen. Dadurch wird bewirkt, daß das zu verdichtende Gas 2, das eine höhere Temperatur aufweist als die Temperatur des bisher im Einsatz gewesenen Wärmetauschers 16 des Kältetrockners 6, das festgefrorene Kondensat am Wärmetauscher 16 bzw. an den Wänden des Kältetrockners 6 abgetaut wird und über den Abfluß 36 ausfließen kann.

Um jedoch das Abtauen des Wärmetauschers 16 im Kältetrockner 6 zu beschleunigen, steuert die Steuervorrichtung 24 über die Steuerleitung 47 das Magnetventil 32 für Heißgas an, wodurch vom Kältemittelverdichter 23, unter Umgehung des Kondensators, das gasförmige Kältemittel mit einer hohen Temperatur über die Bypaßleitung 30 dem Wärmetauscher 16 durchströmen kann. Im Wärmetauscher 16 durchströmt nun das heiße Kältemittel den vereisten Wärmetauscher 16, wodurch sich der Wärmetauscher 16 erwärmt und das auf diesem angefrorene Kondensat abtaut. Das durch das Durchströmen des vereisten Wärmetauschers 16 abgekühlte Kältemittel gelangt über die Rückleitung 39 und das Rückschlagventil 41 zur Anschlußleitung 17. Dort wird das vom Wärmetauscher 16 abgekühlte und verflüssigte Kältemittel beim Einströmen in die Anschlußleitung 17 durch den dadurch bedingten Druckabfall in den gasförmigen Zustand übergeleitet und unterstützt dadurch die Abkühlung des Wärmetauschers 15 im Kältetrockner 5. Das Einhalten der exakten Temperatur des Wärmetauschers 15 erfolgt mittels der Steuerung des Expansionsventils 27, sodaß je nach dem Abtauzustand des Wärmetauschers 16 und den sich dadurch verändernden Temperaturen des zuströmenden verflüssigten Kältemittels soviel verflüssigtes Kältemittel durch das Expansionsventil 27 durchtreten kann, daß die gewünschte Abkühlung des Wärmetauschers 16 erreicht wird.

Hat der Innenraum des Kältetrockners 6 eine voreinstellbare Temperatur erreicht, so öffnet die Steuervorrichtung 24 die Verschlußklappe 37 und schließt gleichzeitig die Verschlußklappe 33 des Kältetrockners 6, wodurch nun das Gas 2 über die Verschlußklappe 37 angesaugt wird. Dies hat den Vorteil, daß bei zu hoher Temperatur des Innenraums des Kältetrockners 6 das Gas 2 nicht mehr vorgekühlt würde, sondern sich mit dem Wasserdampf, der beim Abtauen des Wärmetauschers 16 entsteht, sättigen würde.

Ist der Kältetrockner 6 vollständig abgetaut, so wird von der Steuervorrichtung 24 das Magnetventil 32 geschlossen und das Expansionsventil 28 von der Steuervorrichtung 24 aktiviert. Dabei wird der Kältetrockner 6 auf eine bestimmte Temperatur gekühlt, um beim Umschalten vom Kältetrockner 5 auf den Kältetrockner 6 ein rasches Abkühlen des Gases 2 zu gewährleisten. Nachdem der Kältetrockner 6 auf die voreingestellte Temperatur vorgekühlt ist, kann dann wiederum eine Umschaltung der Verschlußklappen 12, 13, 33, 37 erfolgen, indem die Verschlußklappe 12 geschlossen und die Verschlußklappe 13 geöffnet wird und somit das über die Verschlußklappe 37 in der Verbindungsleitung 35 angesaugte Gas 2 nunmehr wieder über den Kältetrockner 6 getrocknet und abgekühlt wird und über die Verschlußklappe 13 dem Ansaugstutzen 9 des Verdichters 4 zugeführt wird. Die sinngemäße Umschaltung der Verschlußklappe 33 des Kältetrockners 5 kann dann anschließend erfolgen, wobei dann danach die Abtauung des nunmehr durch den Betrieb vereisten Wärmetauschers 15 sinngemäß, wie für den Wärmetauscher 16 beschrieben, vorgenommen wird.

Je nach der gewählten Ansaugtemperatur für das Gas 2 am Ansaugstutzen 9 des Verdichters 4 wird jeweils nach einer bestimmten vorprogrammierbaren Zeitdauer oder nach Feststellung einer entsprechenden Vereisung die Umschaltung zwischen Kühlen des angesaugten Gases 2 und Abtauen des Wärmetauschers 15 bzw. 16 vorgenommen.

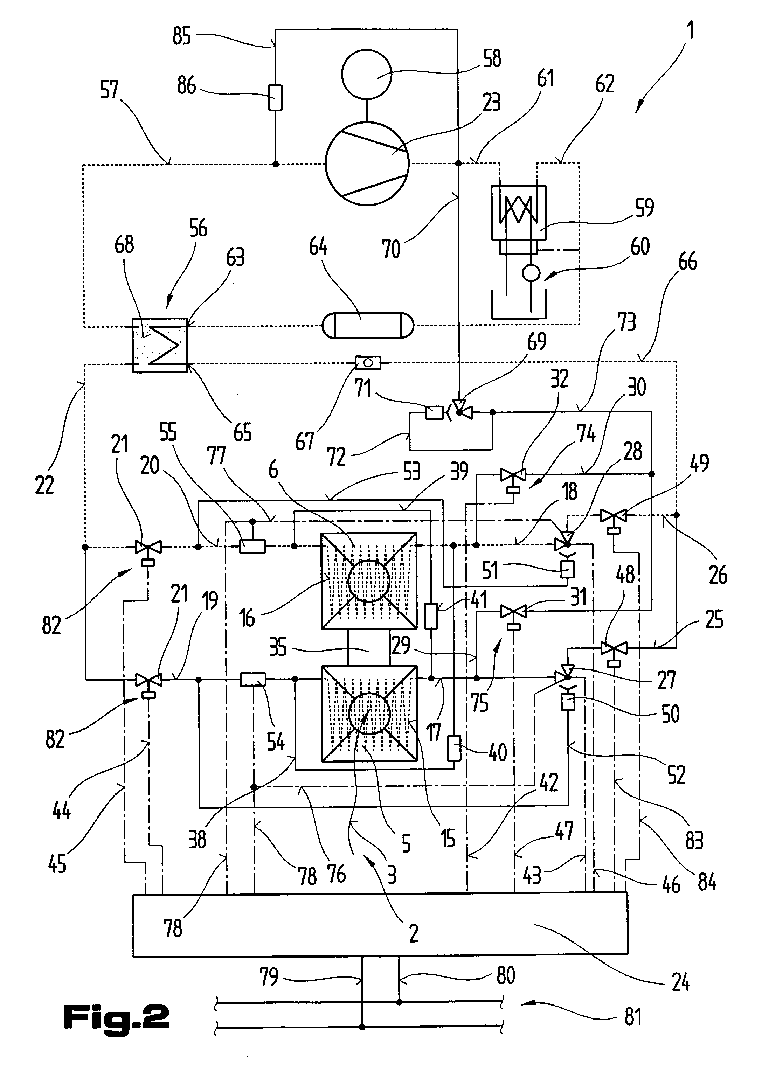

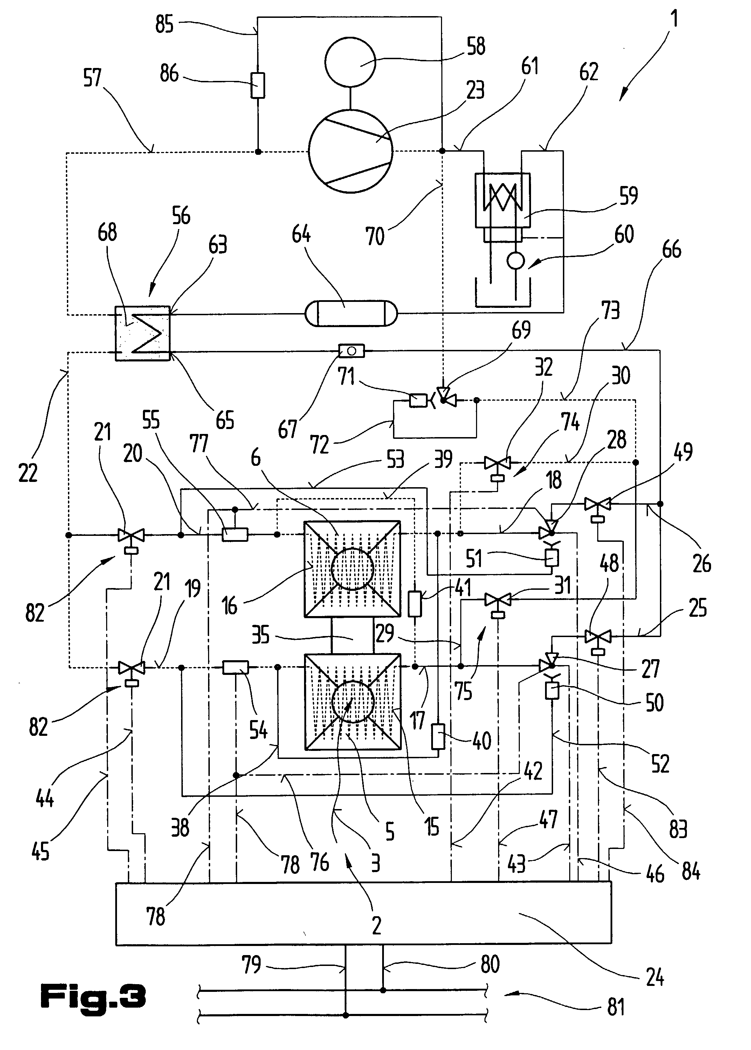

In den Fig. 2 und 3 ist die erfindungsgemäße Vorrichtung 1 zum Verdichten eines Gases 2 anhand eines detaillierten schematischen Schaltbildes der Steuervorrichtung 24 gezeigt. Die Kältetrockner 5, 6 bzw. deren Wärmetauscher 15, 16 sind wiederum über die Anschlußleitungen 17, 18 mit den Expansionsventilen 27, 28 unter Zwischenschaltung von Magnetventilen 48, 49 mit der Druckleitung 25, 26 verbunden. Jedes der Expansionsventile 27, 28 weist weiters einen Drucksensor 50, 51 auf, mit dem durch die Verbindung über Druckleitungen 52, 53 mit der Saugleitung 19, 20 der Druck des gasförmigen Kältemittels direkt oder indirekt festgestellt werden kann. Über den Druck ist es daher auch möglich, die Temperatur des Kältemittels zu überwachen, und kann dem entspechend aufgrund der sich verändernden Druckwerte in der Saugleitung 19, 20 über die Expansionsventile 27, 28 die den Wärmetauschern 15, 16 zuzuführende Kältemittelmenge geregelt werden.

Die Saugleitungen 19, 20 werden über die Magnetventile 21 mit der Saugleitung 22 verbunden. Zwischen dem Magnetventil 21 und jedem Wärmetauscher 15, 16 ist ein Temperaturfühler 54, 55 angeordnet. Es ist jedoch auch möglich, daß anstelle des Temperaturfühlers 54, 55 eine Druckmeßvorrichtung verwendet wird, wobei über den Druck des Kältemittels die Temperatur des Kältemittels bestimmbar ist. Die mit den Druckleitungen 52, 53 verbundenen Drucksensoren 50, 51 sind zwischen den Magnetventilen 21 und den Temperaturfühlern 54, 55 mit der Saugleitung 19, 20 verbunden.

Der Ausgang der Magnetventile 21 ist an die Saugleitung 22 angeschlossen, die in einen Wärmetauscher 56 mündet. Der Wärmetauscher 56 ist über eine Saugleitung 57 mit einem Einlaß des Kältemittelverdichters 23 verbunden. Der Kältemittelverdichter 23 wird dabei über einen Motor 58 angetrieben. Am Ausgang des Kältemittelverdichters 23 ist ein Kondensator 59, in dem über einen Kühlwasserkreislauf 60, bevorzugt im Gegenstromprinzip, das heiße verdichtete gasförmige Kältemittel soweit abgekühlt wird, bis es kondensiert, über eine Leitung 61 angeschlossen. Üblicherweise ist der Kondensator 59, der im Gegenstrom betrieben wird, so ausgeführt, daß er eine entsprechende Kältemittelmenge aufnehmen kann und gleichzeitig die Funktion eines Tanks erfüllt. Wird dagegen beispielsweise ein Kondensator 59 verwendet, bei dem das Kältemittel mittels Luft gekühlt wird, ist im Kältemittelkreislauf zusätzlich ein Tank anzuordnen, um eine entsprechende Reserve an Kältemittel vorrätig zu halten.

Weiters ist der Kondensator 59 über eine Leitung 62 mit einem Eingang 63 des Wärmetauschers 56 unter Zwischenschaltung eines Flüssigkeitswandlers 64 verbunden. Dieser Flüssigkeitswandler 64 dient dazu, eventuell im Kältemittel enthaltene Feuchtigkeit, also Wasserdampf bzw. Wassertröpfchen, abzuscheiden und eine unzulässige Zunahme an Feuchtigkeit bzw. Wasser im Kältemittel zu verhindern. Dagegen dient der Wärmetauscher 56, in dem das heiße Kältemittel, welches vom Flüssigkeitswandler 64 kommt, durchströmt, dazu, um das auf der Saugseite durchströmende gasförmige Kältemittel zu trocknen, d.h. daß eventuell sich in dem gasförmigen Kältemittelstrom noch befindliche flüssige Bestandteile des Kältemittels sich in dem Wärmetauscher 56, der als Kältemitteltrockner arbeitet, absetzen und durch das heiße Kältemittel erhitzt wird und so verdampfen, damit verhindert wird, daß das an der Ansaugseite des Kältemittelverdichters 23 flüssiges Kältemittel zugeführt wird. Ein Ausgang 65 des Wärmetauschers 56 ist über eine Druckleitung 66, die sich in die Druckleitungen 25, 26 für die Wärmetauscher 15, 16 aufteilt und eventuell unter Zwischenschaltung eines Schauglases 67 mit den Expansionsventilen 27, 28 über die Magnetventile 48, 49 verbunden, wodurch der Kreislauf für ein Kältemittel 68 geschlossen ist.

Zum Abtauen der Wärmetauscher 15, 16 ist ein Heißgasregler 69 über eine Leitung 70 mit der Leitung 61 verbunden. Der Heißgasregler 69 umfaßt wiederum einen Drucksensor 71, der über eine Druckleitung 72 mit dem Ausgang des Heißgasreglers 69 verbunden ist. Der Ausgang des Heißgasreglers 69 ist über eine Bypaßleitung 73, die sich wiederum in die Bypaßleitungen 29 und 30 für jeden Wärmetauscher 15, 16 aufteilt, mit den Magnetventilen 31, 32 für das Heißgas verbunden. Die Magnetventile 31, 32 sind mit einem Antrieb 74, 75 zur Fernbetätigung über die Steuervorrichtung 24 versehen.

Die Temperaturfühler 54, 55 sind über Steuerleitungen 76, 77 mit den Expansionsventilen 27, 28 verbunden. Selbstverständlich ist es auch möglich, die Meßergebnisse der Temperaturfühler 54, 55 und der Drucksensoren 50, 51 und 71 über Steuerleitungen 78, wie mit strichpunktierten Linien dargestellt, an die Steuervorrichtung 24 zu übergeben, die die Expansionsventile 27, 28 über die Steuerleitung 43, 46 ansteuern kann.

Die Steuervorrichtung 24 ist dabei über Zuleitungen 79, 80 mit einer Stromquelle 81, die bevorzugt aus einem Netz eines Elektroversorgungsunternehmens gebildet ist, verbunden. Die Magnetventile 31, 32 können zusätzlich auch über die Steuerleitungen 42, 47 mit der Steuervorrichtung 24 verbunden sein.

Weiters sind die Magnetventile 21, die Magnetventile 48, 49 und die Magnetventile 31, 32 mit einem Antrieb 82 versehen. Der Antrieb 82 wird dabei über Steuerleitungen 42, 44, 45, 47, 83, 84 mit der Steuervorrichtung 24 verbunden, die durch Elektromagnete oder elektrische Stellmotoren, beispielsweise Schrittschaltmotoren oder dgl., gebildet sein können.

Die Expansionsventile 27, 28 sind über die Steuerleitungen 43, 46 mit der Steuervorrichtung 24 verbunden, wodurch die Menge des zu expandierenden Kältemittels 68 geregelt bzw. überwacht werden kann.

Wie in Fig. 1 beschrieben, wird der Ausgang des Wärmetauschers 15 über die Rückleitung 38 unter Zwischenschaltung des Rückschlagventils 40 mit dem Eingang des Wärmetauschers 16 bzw. der Anschlußleitung 18 verbunden. Der Ausgang des Wärmetauschers 16 ist dagegen über die Rückleitung 39 unter Zwischenschaltung des Rückschlagventils 41 mit dem Eingang des Wärmetauschers 15 verbunden.

Das zu verdichtende Gas 2 wird bei der in Fig. 1 dargestellten Vorrichtung 1 über den Wärmetauscher 16 des Kältetrockners 6, die geöffnete Verschlußklappe 13, die Ansaugleitung 8 und den Ansaugstutzen 9 vom Verdichter 4 angesaugt und im Verdichter 4 um das gewünschte Ausmaß verdichtet. Der Wärmetauscher 16 ist in einem Kältemittelkreislauf angeordnet, um die Abkühlung des angesaugten Gases 2 und die Ausscheidung der im angesaugten Gas 2 enthaltenen Flüssigkeit und deren Ausscheidung zu ermöglichen.

Um nun die unterschiedliche Funktion beim Abkühlen des angesaugten Gases 2 mit den Wärmetauschern 15 bzw. 16 der Kältetrockner 5 bzw. 6 besser erläutern zu können, sind alle jene Leitungen im Kältemittelkreislauf, die zum Abkühlen des angesaugten Gases 2 mit dem Wärmetauscher 16 des Kältetrockners 6 nötig sind, in strichlierten Linien dargestellt.

Das durch den Kältemittelverdichter 23 hoch verdichtete, gasförmige Kältemittel 68 wird durch den Kondensator 59 geführt und dabei in den flüssigen Zustand durch Abkühlung gebracht und dann dem Flüssigkeitswandler 64 zugeführt. Von dort gelangt das Kältemittel 68 über den Wärmetauscher 56, die Druckleitung 66 und die Druckleitung 26 zum Magnetventil 49. Ist das Magnetventil 49 durch die Ansteuerung über die Steuerleitung 84 von der Steuervorrichtung 24 geöffnet, so kann das flüssige Kältemittel 68 zum Expansionsventil 28 weiterströmen. Durch den Druckabfall, in der dem Expansionsventil 28 nachgeordneten Anschlußleitung 18 expandiert nun das flüssige Kältemittel 68 und geht in einen gasförmigen Zustand über. Wie bei der Expansion des Kältemittels 68 wird Energie verbraucht, um den Übergang vom flüssigen in den gasförmigen Zustand zu erreichen. Die benötigte Energie wird dabei dem flüssigen Kältemittel 68 und dem Wärmetauscher 16 entnommen. Dabei tritt durch die Verdampfungskälte Abkühlung ein.

Beim Betrieb einer derartigen Vorrichtung 1 kann nun beispielsweise die Auslegung so getroffen sein, daß das Kältemittel 68 in der Leitung 61 eine Temperatur zwischen + 70°C und + 105°C, bevorzugt + 80°C bis + 90°C, aufweist und bei dem gewählten Verdichtungsdruck gasförmig ist. Im Kondensator 59 wird beispielsweise über den Kühlwasserkreislauf 60 oder durch eine entsprechende Luftkühlung dem Kältemittel 68 so viel Energie entzogen, wodurch dieses dabei so weit abgekühlt wird, daß es bei den herrschenden Druckverhältnissen eine Temperatur zwischen + 25°C und + 60°C, bevorzugt + 35°C, aufweist, wobei der Druck bei einem Kältemittel, insbesondere der Type R22, absolut 13,5 bar beträgt Durch diese Abkühlung wird das Kältemittel 68 verflüssigt und wird in dem nachfolgenden Wärmetauscher 56 durch die Abkühlung im Gegenstrom mit dem kalten, angesaugten gasförmigen Kältemittel 68 weitere Wärmeenergie entzogen, sodaß es mit einer Temperatur zwischen + 15°C und + 25°C, bevorzugt + 20°C, dem Expansionsventil 28 zuströmt. Durch den Druckabfall im Expansionsventil 28 geht nun das verflüssigte Kältemittel 68 in den gasförmigen Zustand über, wobei die über das Expansionsventil 28 zugeführte Menge an Kältemittel 68 so gesteuert wird, daß der über die Druckleitung 53 in der Saugleitung 20 überwachte Druck des Kältemittels 68 beispielsweise einem Soll-Druck von 4,8 bar entspricht und gleichzeitig die mit dem Temperaturfühler 55 überwachte Temperatur höher ist, als die dem Soll-Druck von 4,8 bar entsprechende Soll-Temperatur von 5°C. Dadurch wird eine Überhitzung des Kältemittels 68 in der Saugleitung 20 erzielt, die, wie in der Folge noch näher erläutert werden wird, bewirkt, daß ein Übergang vom gasförmigen in den flüssigen Zustand auch bei wechselnden äußeren Einflüssen sicher verhindert ist, um einen Flüssigkeitsschlag im Kältemittelverdichter 23 auszuschließen.

Je nach der Menge des über das Expansionsventil 28 zugeführten bzw. expandierten flüssigen Kältemittels 68 kann eine größere oder kleinere Wärmemenge aus dem Wärmetauscher 16 abgeführt werden und so eine vorbestimmbare Temperatur des angesaugten Gases 2 im Bereich des Ansaugstutzens 9 erzielt werden, wozu im Bereich der Ansaugleitung 8 bzw. des Ansaugstutzens 9 eine Temperaturmessung des angesaugten Gases 2 erfolgen kann.

Die durch das Expansionsventil 28 zugeführte Menge an Kältemittel 68 kann dabei in einem direkten Regelkreis über den in der Druckleitung 53 vorherrschenden Druck mittels des Drucksensors 51, der die Öffnungsweite des Expansionsventils 28 verändern kann, erfolgen, wobei zusätzlich eine Beeinflussung dieser Steuerungswerte bzw. der Funktion des Expansionsventils 28 durch die Steuervorrichtung 24 erfolgen kann. Eine derartige zusätzliche Beeinflussung des Expansionsventils 28 durch die Steuervorrichtung 24 ist vor allem dann notwendig, wenn eine exakte Temperatur des angesaugten Gases 2 im Bereich des Ansaugstutzens 9 des Verdichters 4 für das Gas 2 erforderlich ist. Wird nämlich die Regelung in dem Regelkreis unter Verwendung der Druckleitung 53 und des Drucksensors 51 anhand der vordefinierten Druckverhältnisse und der Temperaturverhältnisse in der Saugleitung 20 vorgenommen, so kann die Temperatur des angesaugten Gases 2 am Ansaugstutzen 9 in Abhängigkeit von der Temperatur des Gases 2 im Bereich der Ansaugstutzen 34 variieren. Ist es beispielsweise im Winter bei der Verdichtung von Luft, die vom Kältetrockner 5, 6 angesaugt wird, kälter, so wird bei gleicher Kälteleistung eine kältere und entsprechend dichtere Luft am Ansaugstutzen 9 des Verdichters 4 vorliegen.

Dabei erfaßt der Temperaturfühler 54 die Ist-Temperatur und der Drucksensor den Ist-Druck. Bei der direkten Regelung mit einem geschlossenen Regelkreis ohne Beeinflussung durch die Steuervorrichtung 24 wird am Expansionsventil 28 die Soll-Temperatur und der Soll-Druck eingestellt. Über die Druckleitung 53 und den Drucksensor 51 sowie den Temperaturfühler 55, der über die Steuerleitung 77 am Expansionsventil 28 angeschlossen ist, wird nun das über das Expansionsventil 28 zugeführte Kältemittel 68 so gesteuert, daß die Ist-Temperatur und der Ist-Druck der Soll-Temperatur und dem Soll-Druck entsprechen.

Weiters ist es auch möglich, daß die Temperaturfühler 54, 55 und die Drucksensoren 50, 51 mit der Steuervorrichtung 24 verbunden sind. Dabei wird mit den Temperaturfühlern 54, 55 wiederum die Ist-Temperatur und von Drucksensoren 50, 51 der Ist-Druck erfaßt und an die Steuervorrichtung 24 weitergegeben. Die Ist-Temperatur und/oder der Ist-Druck wird anschließend in der Steuervorrichtung 24 mit der Soll-Temperatur und/oder dem Soll-Druck, die über eine Eingabevorrichtung eingestellt werden können, verglichen, wobei die Steuervorrichtung 24 anschließend in Abhängigkeit von der Differenz zwischen der Soll- und Ist-Temperatur und/ oder -Druck die Expansionsventile 27, 28 ansteuert und damit die Menge des zu expandierenden, flüssigen Kältemittels 68 geregelt werden kann.

Nachdem das Kältemittel 68 in gasförmigem Zustand verbracht wurde, strömt es durch den Wärmetauscher 16, wodurch das angesaugte Gas 2 auf die entsprechende Temperatur abgekühlt wird. Anschließend strömt das gasförmige Kältemittel 68 über die Saugleitung 20 und das Magnetventil 21 zur Saugleitung 22 und von dieser in den Wärmetauscher 56. Von dort wird das gasförmige Kältemittel 68 über die Saugleitung 57 vom Kältemittelverdichter 23 angesaugt. Durch das Verdichten des gasförmigen Kältemittels 68 vom Kältemittelverdichter 23 wird das gasförmige Kältemittel 68 auf hohen Druck komprimiert und anschließend im Kondensator 59 durch Abkühlung verflüssigt, wodurch der Kältemittelkreislauf abgeschlossen ist.

Nachdem nun, wie anhand des Blockschaltbildes in Fig. 2 beschrieben, das vom Verdichter 4 angesaugte Gas 2 im Kältetrockner 6 abgekühlt wurde, wird nun anhand der Fig. 3 der Abtauungszyklus für diesen Kältetrockner 6, der zuvor für das Abkühlen des Gases 2 zuständig war, beschrieben, wobei die Ablagerung des Kondensates am Wärmetauscher 16 in Form von Eis abgetaut wird. Der Kreislauf der zum Abtauen des Eises benötigten Leitungen ist mit strichlierten Linien dargestellt.

Während dieses nun nachfolgend beschriebenen Abtauvorganges wird das für den Verdichter 4 benötigte Gas 2 im Kältetrockner 5 abgekühlt und in gekühlter Form den Verdichter 4, wie in Fig. 1 gezeigt, zugeführt. Der Eismantel am Wärmetauscher 16 entsteht dadurch, daß durch die Unterkühlung des angesaugten Gases 2 die im Gas 2 enthaltene Feuchtigkeit ausgeschieden wird und durch die Minustemperaturen im Bereich des Wärmetauschers 16 festfriert. Da ein derartiger Eismantel eine hohe Isolierwirkung ausübt, kommt es nach einer gewissen Betriebsdauer dazu, daß die Wärmeaufnahme des Kältemittels 68 im Wärmetauscher 15 bzw. 16 nicht mehr ausreicht, um die gewünschte Unterkühlung des angesaugten Gases 2 sicherzustellen.

Dies wird beispielsweise bei dem im Betrieb befindlichen Wärmetauscher 16 derart überwacht, daß mittels Temperaturfühler 55 und Drucksensor 51 im Bereich der Saugleitung 20 die Temperatur bzw. der Druck des Kältemittels 68 nach dem Verlassen des Wärmetauschers 16 überwacht wird.

Ist die Temperatur bzw. der Druck des aus dem Wärmetauscher 16 kommenden gasförmigen Kältemittels 68 gegenüber der Solltemperatur bzw. dem Solldruck niedriger, d.h. würde dem Kältemittel 68 im Wärmetauscher 16 aufgrund der Isolierwirkung des Eismantels zuwenig Kälte entzogen, so wird dies über die Steuervorrichtung 24 unter Berücksichtigung eventueller weiterer Parameter, wie beispielsweise die Umgebungstemperatur, erkannt. Selbstverständlich ist es möglich, daß die Steuerung zum Einleiten des Abtauvorganges über eine voreinstellbare Zeitdauer erfolgen kann.

Während dieses nun nachfolgend beschriebenen Abtauvorganges wird das für den Verdichter 4 benötigte Gas 2 im Kältetrockner 5 abgekühlt und in gekühlter Form dem Verdichter 4, wie in Fig. 1 beschrieben, zugeführt.

Durch die Steuervorrichtung 24 wird dann die dem abzutauenden Wärmetauscher 16 zugeordnete gasdichte Verschlußklappe 13 geschlossen und das Expansionsventil 28 von der Steuervorrichtung 24 derart beaufschlagt, daß die Zufuhr von flüssigem Kältemittel 68 unterbrochen wird.

Von der Steuervorrichtung 24 wird dann weiters der Antrieb 74 des Magnetventils 32 beaufschlagt, wodurch die Bypaßleitung 30 mit der Anschlußleitung 18 verbunden wird und das vom Heißgasregler 69 abgegebene Heißgas über die Bypaßleitung 73 in die Anschlußleitung 18 den Wärmetauscher 16 zugeführt wird. Dadurch wird der Innenraum des Wärmetauschers 16 erwärmt. Durch die Erwärmung wird das Eis, das sich an den Wänden des Wärmetauschers 16 bzw. an den Wänden des Kältetrockners 6 angelegt hat, abgetaut und fließt über den Abfluß 36, wie in Fig. 1 gezeigt, ab.

Zum Abtauen, welches nur dann notwendig ist, wenn die Temperaturen des beim Verdichter 4 benötigten Gases 2 unterhalb von 0°C liegen, was bei den vorliegend beschriebenen Anlagen überwiegend der Fall ist, wird nun in die Anschlußleitung 18 des Wärmetauschers 16 zwischen diesem und dem Expansionsventil 28 das heiße gasförmige Kältemittel 68, z.B. mit einer Temperatur zwischen + 70°C und + 105°C über die Bypaßleitung 30 und dem Magnetventil 32 zugeführt.

Während dieser Zufuhr von heißem, gasförmigen Kältemittel 68 in den Wärmetauscher 16 ist die gasdichte Verschlußklappe 13, siehe Fig. 1, geschlossen. Dies deshalb, da durch das Abtauen des am Wärmetauscher 16 festgesetzten Eisbelages ein Dunst entsteht, der wassergesättigt ist, und bei nicht gasdichter Ausführung der Verschlußklappe 13 könnte daher dieser Dunst durch den Unterdruck in die Ansaugleitung 8 angesaugt werden und somit zum Verdichter 4 gelangen, wodurch der erwünschte Trocknungseffekt des angesaugten Gases 2 nicht zustande kommen würde bzw. die Gefahr eines Wasserschlages beim Verdichter 4 besteht.

Darüber hinaus ist auch das Magnetventil 21 der Saugleitung 20 geschlossen, wobei die Saugleitung 20 über die Rückleitung 39 unter Zwischenschaltung des Rückschlagventils 41 mit der Anschlußleitung 17 verbunden ist und den Wärmetauscher 15, mit welchem nunmehr das angesaugte Gas 2 abgekühlt wird, mit abgekühltem Kältemittel 68 des Wärmetauschers 16 versorgt. Das über die Bypaßleitung 30 zugeführte heiße, gasförmige Kältemittel 68, dessen Menge über den Heißgasregler 69 geregelt wird, beträgt nur einen geringen Teil, beispielsweise 10 bis 20 % des gesamten vom Expansionsventil 27 expandierten Kältemittels 68.

Durch die Kälte im abzutauenden Kältetrockner 6 wird das heiße, gasförmige Kältemittel 68 durch Abkühlung verflüssigt und gelangt vom Ausgang des Wärmetauschers 16, also der Saugleitung 20, über die Rückleitung 39 und das Rückschlagventil 41 an die Anschlußleitung 17 des Wärmetauschers 15. Die Anschlußleitung 17 wird dabei mit einem gasförmigen, kalten Kältemittel 68 für den Wärmetauscher 15 des Kältetrockners 5 durchströmt. Durch den Druckunterschied zwischen der Anschlußleitung 17 und der Rückleitung 39 wird das vom Wärmetauscher 16 verflüssigte Kältemittel 68 wieder gasförmig und vermischt sich mit dem gasförmigen Kältemittel 68 in der Anschlußleitung 17, wodurch der Kältemittelkreislauf für das Abtauen des Kältetrockners 6 geschlossen ist.

Nach Erreichen einer voreinstellbaren Innentemperatur des abzutauenden Kältetrockners 6 öffnet die Steuervorrichtung 24 die Verschlußklappe 37 und schließt die Verschlußklappe 33 des Kältetrockners 6, sodaß die beim Abtauen bei einer bestimmten Temperatur mit Wasser gesättigte Luft vom Kältemittelverdichter 23 nicht angesaugt werden kann.

Für die Abtauphase des Kältetrockners 6 bzw. 5 steht jene Zeit zur Verfügung, bis der zur Unterkühlung des angesaugten Gases 2 verwendete Wärmetauscher 16 oder 15 so stark vereist ist, daß die für die Unterkühlung des angesaugten Gases 2 notwendige Kühlwirkung nicht mehr ausreicht.

Desweiteren ist dem Kältemittelverdichter 23 eine Bypaßleitung 85 zugeordnet, die sich zwischen der Saugleitung 57 und der Leitung 61 erstreckt. In dieser Bypaßleitung 85 ist ein Überund Unterdruckregelventil 86 vorgesehen, um Beschädigungen des Kältemittelverdichters 23 zu vermeiden. Auf Grund der geringen Menge an heißem, gasförmigen Kältemittel 68, das zum Abtauen der Wärmetauscher 15 bzw. 16 jeweils benötigt wird, ist auch ein Durchströmquerschnitt der Rückleitungen 38 bzw. 39 erheblich geringer als der Querschnitt der Anschlußleitungen 17 bzw. 18. Durch das Einströmen des flüssigen Kältemittels 68 in die Anschlußleitung 17 bzw. 18, in der das Druckniveau über die Expansionsventile 27 bzw. 28 auf den gewünschten Wert abgesenkt wird, erfolgt ebenfalls eine Expansion des durch die Rückleitung 39 bzw. 38 zugeführten flüssigen Kältemittels 68. Die exakte Regelung und Beibehaltung der gewünschten Druck- und Temperaturverhältnisse in den Saugleitungen 19 bzw. 20 des jeweils zur Kühlung des angesaugten Gases 2 eingesetzten Wärmetauschers 15 bzw. 16 ist dadurch sichergestellt, daß die sich ändernden Verhältnisse, insbesondere der Temperatur des flüssigen Kältemittels 68, welches durch die Rückleitung 38 bzw. 39 zugeführt wird, durch Einstellungen und Regelungen des Expansionsventils 27 bzw. 28 bei Wechselbetrieb ausgeglichen wird.

Selbstverständlich ist es auch möglich, daß nach dem Abtauen die Rückfuhr des Kältemittels 68 über die Rückleitungen 38, 39, jedoch vor den jeweiligen Expansionsventilen 27, 28 des zur Kühlung eingesetzten Wärmetauschers 15, 16 in die Druckleitungen 25, 26 erfolgen kann. Es ist nur sicherzustellen, daß im Bereich der Einspeisung des vom abzutauenden Wärmetauscher 16 bzw. 15 kommenden Kältemittels 68 der Druck in diesem Kältemittel 68 höher ist, als in den Druckleitungen 25 bzw. 26. Kann dies nicht in jedem Betriebszustand sichergestellt werden, so ist die Einspeisung beispielsweise über eine Venturidüsenanordnung oder dgl. möglich.

Bevor nun der Kältetrockner 6 wieder in Betrieb genommen wird, d.h. daß die Abtauphase abgeschlossen ist, wird der Kältetrockner 6 vorgekühlt. Dabei wird von der Steuervorrichtung 24 das Magnetventil 49 geöffnet. Somit gelangt das flüssige Kältemittel 68 vom Kältemittelverdichter 23 zum Expansionsventil 28, mit dem über die Steuervorrichtung 24 die Temperatur, auf die der Innenraum des Kältetrockners 6 abgekühlt werden soll, festgelegt wird. Nachdem der Kältetrockner 6 auf die entsprechende Temperatur vorgekühlt wurde, kann bei zu stark vereistem Kältetrockner 5 der Ansaugvorgang für das Gas 2 nun über den Kältetrockner 6 erfolgen. Weiters kann nach abgeschlossenem Vorkühlen mit der Steuervorrichtung 24 die Verschlußklappe 33 des Kältetrockners 6 und die Verschlußklappe 37 geschlossen werden.

Selbstverständlich ist eine Ausbildung der in den Fig. 1 bis 3 dargestellten Vorrichtung 1 auch ohne Verwendung der drei Verschlußklappen 33 und 37 möglich, wobei dann das jeweils über den Verdichter 4 zu verdichtende Gas 2 in jeden Kältetrockner 5 bzw. 6 unabhängig angesaugt wird.

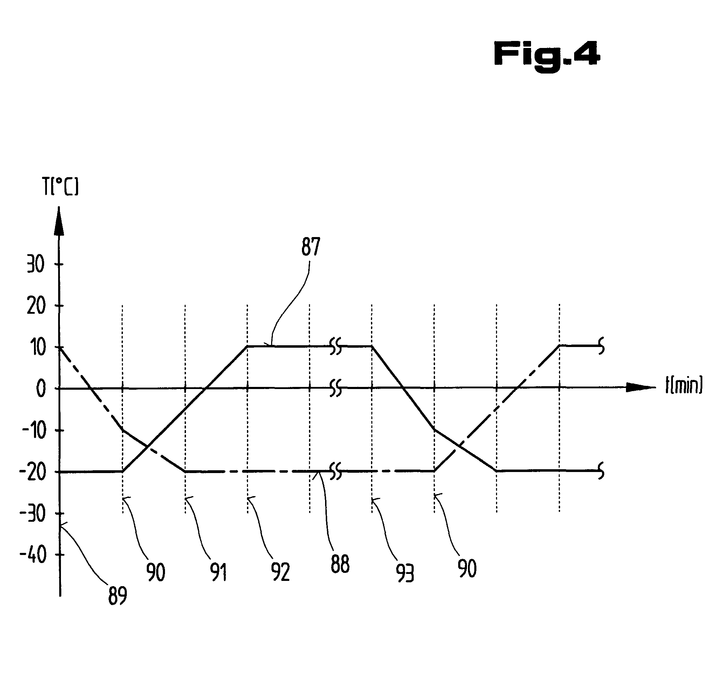

In Fig. 4 ist ein Temperaturverlauf der Innentemperatur im Kältetrockner 5 bzw. 6 dargestellt, wobei auf der Abszisse die Zeit t in Minuten und auf der Ordinate die Temperatur T in °C aufgetragen ist. Die in vollen Linien dargestellte Kennlinie 87 entspricht dem Temperaturverlauf im Kältetrockner 5 und die in strichpunktierten Linien dargestellte Kennlinie 88 entspricht dem Temperaturverlauf im Kältetrockner 6.

Wie zuvor beschrieben, werden die Kältetrockner 5 und 6 in unterschiedlicher Weise betrieben, d.h. der Kältetrockner 5 wird, wie die dargestellte Kennlinie 87 zeigt, vom Kühlbetrieb in den Abtaubetrieb und der Kältetrockner 6 vom Abtaubetrieb in den Kühlbetrieb umgeschaltet. Zum Zeitpunkt 89 ist der Abtauzyklus für den Wärmetauscher 16 beendet und es wird von der Steuervorrichtung 24, wie anhand der Fig. 2 und 3 beschrieben, der Kältetrockner 6 vorgekühlt. Zum Zeitpunkt 90 ist der Innenraum des Kältetrockners 6 auf die mit der Steuervorrichtung 24 voreingestellte Temperatur abgekühlt und es kann vom Kältetrockner 5 auf den Kältetrockner 6 umgeschaltet werden. Es ist jedoch auch möglich, diesen Zustand des Vorkühlens über längere Zeit aufrecht zu erhalten, wenn der Kältetrockner 5 noch nicht zu stark vereist ist.

Nachdem von der Steuervorrichtung 24 der Abtauzyklus für den Kältetrockner 5 eingeleitet wurde, wie dies zum Zeitpunkt 90 geschieht, wird der Wärmetauscher 15 vom Kältetrockner 5 mit heißem, gasförmigen Kältemittel 68 durchströmt, wodurch die Temperatur im Innenraum des Kältetrockners 5 zu steigen beginnt. Gleichzeitig mit dem Einleiten des Abtauzykluses für den Kältetrockner 5 wird der Kühlzyklus für den Kältetrockner 6 gestartet. Dies ist wiederum zum Zeitpunkt 90 ersichtlich. Weiters ist es möglich, die Vorkühlphase bereits auf die entsprechende Temperatur des Kältetrockners 5 durchzuführen, um ein rasches, verlustarmes Umschalten vom Kältetrockner 5 auf den Kältetrockner 6 zu gewährleisten. Zum Zeitpunkt 91 hat der Kältetrockner 6 die von der Steuervorrichtung 24 eingestellte Temperatur erreicht und kann das angesaugte Gas 2 entsprechend kühlen.

Durch das Einströmen des heißen, gasförmigen Kältemittels 68 in den Wärmetauscher 15 des Kältetrockners 5 steigt die Innentemperatur im Kältetrockner 5 weiter an. Zum Zeitpunkt 92 hat die Innentemperatur des Kältetrockners 5 den maximalen Wert erreicht, wodurch das Eis zu schmelzen beginnt. Zum Zeitpunkt 93 ist der Abtauvorgang für den Kältetrockner 5 abgeschlossen und die Steuervorrichtung 24 steuert die Vorrichtung 1 so an, daß der Kältetrockner 5 vorgekühlt wird und damit der Zustand des Zeitpunktes so wie zuvor für den Kältetrockner 6 erreicht ist, worauf sich dann die folgenden Zeitpunkte 91 bis 93 wiederholen.

Dieser Zustand kann nun über einige Perioden aufrecht erhalten werden, wenn der Kältetrockner 6 noch nicht zu sehr vereist ist. Zum Zeitpunkt 90 wird mit einem Temperaturfühler 94, der in Fig. 1 dargestellt ist, im Kältetrockner 6 festgestellt, daß die gewünschte Kühltemperatur für das angesaugte Gas 2 nicht mehr erreicht wird, wodurch die Steuervorrichtung 24 nun den Kältetrockner 6 auf Abtaubetrieb umschaltet und gleichzeitig den Kältetrockner 5 für die Kühlung des angesaugten Gases 2 aktiviert, wodurch der Kältetrockner 5 im Abkühlbetrieb und der Kältetrockner 6 im Abtaubetrieb betrieben werden.

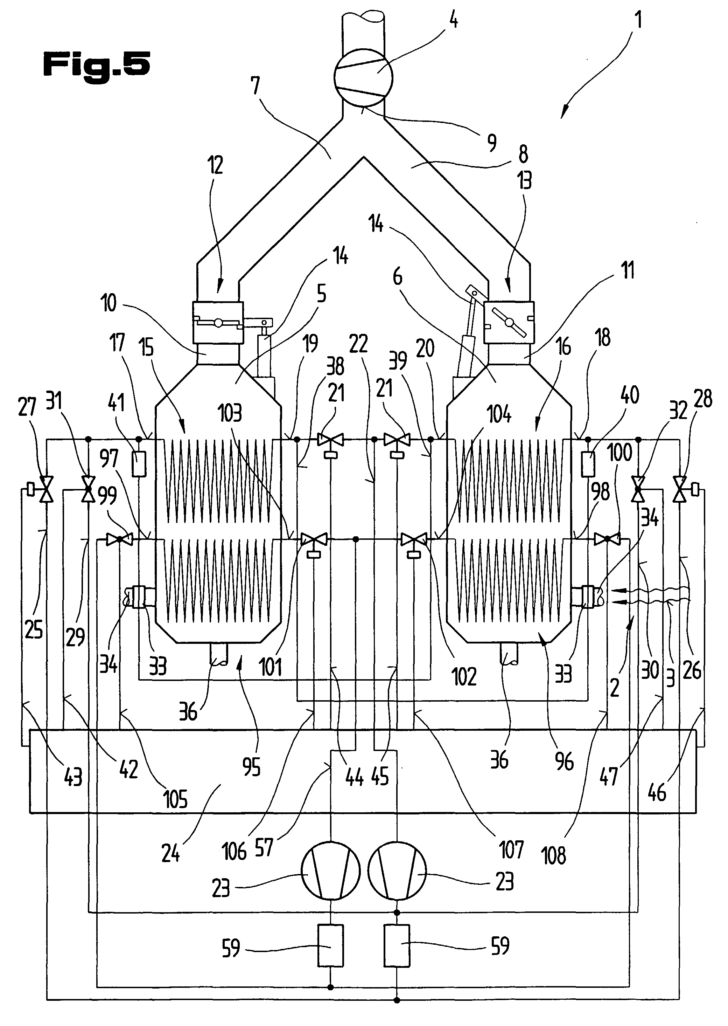

In Fig. 5 ist eine mögliche Ausführungsvariante der erfindungsgemäßen Vorrichtung 1 zum Verdichten von Gasen 2, die schematisch durch Pfeile 3 angedeutet sind, gezeigt. Dabei werden für jene Teile, die den Teilen der zuvor beschriebenen Ausführungsvarianten entsprechen, die gleichen Bezugszeichen verwendet. Dabei wird wiederum vom Verdichter 4 das Gas 2 über den Ansaugstutzen 34 des jeweiligen Kältetrockners 5, 6 angesaugt und in diesem abgekühlt.

Der Unterschied zu der in Fig. 1 beschriebenen Ausführungsvariante liegt darin, daß in jedem der beiden Kältetrockner 5, 6 zwei in Strömungsrichtung hintereinander geschaltete Wärmetauscher 95, 15 bzw. 96, 16 angeordnet sind. Während die Wärmetauscher 15, 16 in der bereits zuvor beschriebenen Art über den Kältemittelkreislauf, bestehend aus dem Kältemittelverdichter 23, den verschiedenen Magnetventilen 21, 31, 32 und den Expansionsventilen 27, 28, angesteuert werden, ist nun für die weiteren Wärmetauscher 95, 96 ein eigener Kältemittelkreislauf vorgesehen. Damit ist jeder Eingang der Wärmetauscher 95, 96 über eine eigene Anschlußleitung 97, 98 unter Zwischenschaltung eines Expansionsventils 99, 100 mit dem Ausgang eines für diesen Kältemittelkreislauf eigenen Kondensators 59, der einem weiteren Kältemittelverdichter 23 nachgeschaltet ist, verbunden. Der Ansaugstutzen des Kältemittelverdichters 23 ist über die Saugleitung 57 unter Zwischenschaltung der von Magnetventilen 101, 102 mit den an den Wärmetauschern 95, 96 in Strömungsrichtung nachgeschalteten Saugleitungen 103, 104 verbunden. Die Expansionsventile 99, 100 und die Magnetventile 101, 102 sind wiederum über Steuerleitungen 105 bis 108 mit der Steuervorrichtung 24 verbunden.

Bei diesem dargestellten Ausführungsbeispiel ist im Kältemittelkreislauf für die Wärmetauscher 95, 96 keine Möglichkeit vorgesehen, einen der beiden Wärmetauscher 95, 96 wahlweise heißes, gasförmiges Kältemittel 68 zum Abtauen zuzuführen. Vielmehr erfolgt beim wechselweisen Abtauen der Wärmetauscher 15, 95 bzw. 16, 96 nur eine entsprechende Aufheizung der Wärmetauscher 15 oder 16 mit dem heißen, gasförmigen Kältemittel 68, wie dies anhand der Fig. 2 und 3 ausführlich beschrieben worden ist, und wird durch die Erwärmung der Wärmetauscher 15 bzw. 16 auch das Eis auf den Wärmetauschern 95, 96 abgetaut. Sollte die Wärmeleistung der Wärmetauscher 15 oder 16 zum Abtauen der Kältetrockner 5 bzw. 6 nicht ausreichen, so ist es selbstverständlich auch möglich, den Kältemittelkreislauf der Wärmetauscher 95, 96 derart auszubilden, daß auch in diesen die entsprechenden Rückleitungen 38, 39 und die dafür notwendigen Magnetventile 31, 32 eingebaut werden, sodaß jeder der beiden Wärmetauscher 95, 96 durch die Zufuhr von heißem, gasförmigen Kältemittel 68 in der gleichen Weise abgetaut werden kann, wie die Wärmetauscher 15, 16.

Selbstverständlich wäre es auch möglich, daß an Stelle von zwei getrennten Kältemittelverdichtern 23 für die Wärmetauscher 15, 16 bzw. 95, 96 ein gemeinsamer Kältemittelverdichter 23 vorgesehen ist. Aus Gründen der höheren Betriebssicherheit und der geringeren Kosten von Kältemittelverdichtern 23 mit geringer Leistung empfiehlt es sich jedoch, für jeden dieser Kältemittelkreisläufe einen eigenen Kältemittelverdichter 23 zu verwenden. Dies hat den Vorteil, daß bei Ausfall eines Kältemittelverdichters 23 zumindest ein Teil der erforderlichen Abkühlung des angesaugten Gases 2 möglich ist und somit, wenn auch mit einem schlechteren Wirkungsgrad, die erfindungsgemäße Vorrichtung 1 weiter betrieben werden kann.

Das Verfahren zum Verdichten von Gasen 2 gemäß der vorliegenden Ausführungsform läuft nun wie folgt ab:
Das zu verdichtende Gas 2 wird bei der dargestellten Vorrichtung 1 beispielsweise über den Kältetrockner 6, d.h. über den Ansaugstutzen 34 der geöffneten Verschlußklappe 33 des Kältetrockners 6 in den Kältetrockner 6 angesaugt. Das angesaugte Gas 2 passiert dann den Wärmetauscher 96, in dem das angesaugte Gas 2 vorgekühlt wird. Anschließend passiert dann das angesaugte Gas 2 den Wärmetauscher 16 und wird durch diesen auf die gewünschte Temperatur abgekühlt und gelangt über die Ansaugleitung 8 und die geöffnete Verschlußklappe 13 zum Verdichter 4.

Wird das mit den Wärmetauschern 16 und 96 angesaugte Gas 2 abgekühlt, so werden von der Steuervorrichtung 24 die Expansionsventile 28 und 100 sowie die Magnetventile 21 und 102 angesteuert. Dadurch kann das kalte, gasförmige Kältemittel 68 über die Anschlußleitung 18 und 98 in die Wärmetauscher 16 und 96 strömen, wodurch im Inneren des Kältetrockners 6 eine Abkühlung des Gases 2 erfolgt.

Gleichzeitig mit der Betätigung der Expansionsventile 28 und 100 wird von der Steuervorrichtung 24 das Magnetventil 21 und 102 über die Steuerleitungen 45 und 107 angesteuert, wodurch das kalte, gasförmige Kältemittel 68 vom Wärmetauscher 16 und 96 über die Saugleitungen 20 und 104 an die Saugleitungen 22 und 57 und zu den Kältemittelverdichtern 23 fließen kann.

Das Abkühlen des angesaugten Gases 2 erfolgt nun über die beiden Wärmetauscher 16 und 96. Dabei werden die beiden Wärmetauscher 16 und 96 mit unterschiedlichen Temperaturbereichen betrieben, d.h. daß der Wärmetauscher 96 eine Temperatur von z.B. -10° und der Wärmetauscher 16 eine Temperatur von z.B. -20° aufweist, wodurch das angesaugte Gas 2 beim Vorbeiströmen an dem Wärmetauscher 96 vorgekühlt und anschließend durch den Wärmetauscher 16 auf die vorgegebene Temperatur abgekühlt wird. Dies hat den Vorteil, daß dabei das angesaugte Gas 2 auf eine tiefere Temperatur gekühlt werden kann, wodurch sichergestellt ist, daß das im Gas 2 enthaltene Kondensat abgeschieden wird.

Durch das Abkühlen des Gases 2 im Kältetrockner 6 kommt es, wie in Verbindung mit den zuvor beschriebenen Fig. bereits erläutert, bei einer Abkühlung des Gases 2 unter 0°C zur Eisbildung innerhalb der Kältetrockner 6 bzw. 5, wodurch die Kältetrockner 5, 6 wechselweise abgetaut werden müssen. Dabei wird nun, wie beim Kältetrockner 5 gezeigt, die Verschlußklappe 12 geschlossen, wodurch der Verdichter 4 kein Gas 2 über den Kältetrockner 5 ansaugen kann. Gleichzeitig mit dem Schließen der Verschlußklappe 12 steuert die Steuervorrichtung 24 das Magnetventil 31 an, wodurch vom Kältemittelverdichter 23 heißes, gasförmiges Kältemittel 68 über die Bypaßleitung 29 in die Anschlußleitung 17 gelangt und somit der Wärmetauscher 15 erwärmt wird. Vom Ausgang des Wärmetauschers 15 fließt wiederum das erwärmte Kältemittel 68, wie in Fig. 3 im Detail erläutert, über das Rückschlagventil 40 und die Rückleitung 38 zum Eingang des Wärmetauschers 16 und wird dort in die Anschlußleitung 18 eingespeist, so-daß es sich mit dem kalten, gasförmigen Kältemittel 68 vermischt und der Kältemittelkreislauf geschlossen ist.

Durch das Durchströmen des Wärmetauschers 15 mit heißem Kältemittel 68 erwärmt sich der Wärmetauscher 15, wodurch das Eis am Wärmetauscher 15 und an den Wänden des Kältetrockners 5 abgetaut wird. Gleichzeitig entsteht im Kältetrockner 5 ein Hitzestau, wodurch der Wärmetauscher 95 ebenfalls abgetaut wird und somit das Eis in Form von Wasser aus dem Abfluß 36 abfließt.

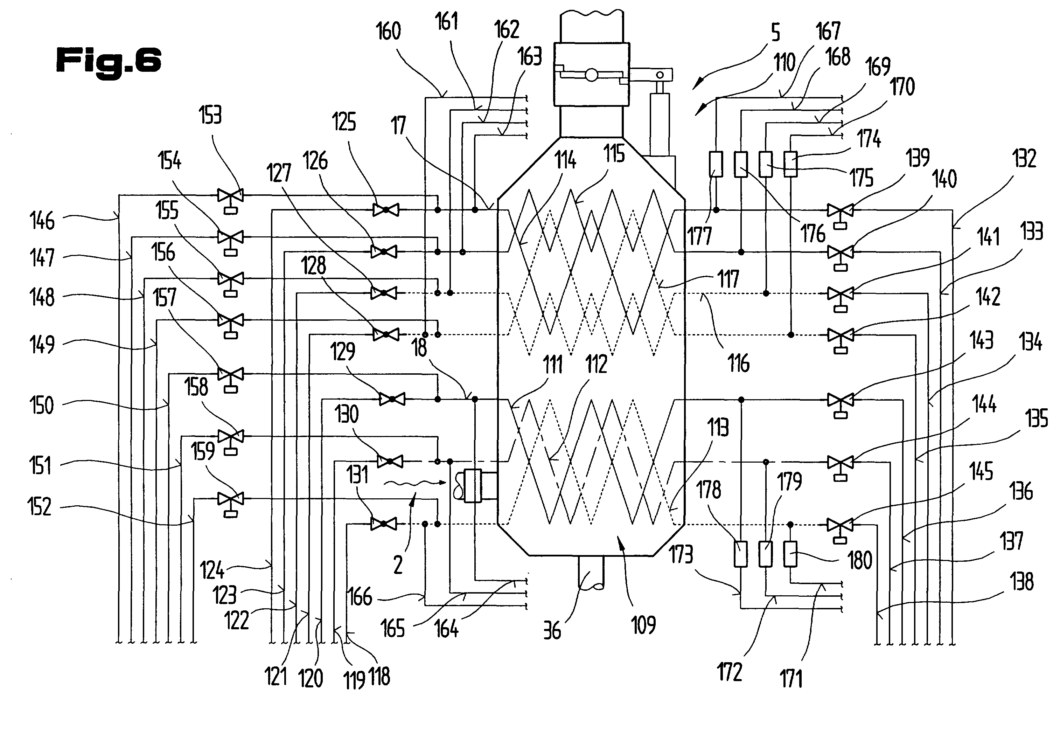

In Fig. 6 ist eine andere Ausführungsvariante der erfindungsgemäßen Lösung gezeigt, wobei der Übersichtlichkeit wegen nur einer der zuvor beschriebenen Kältetrockner 5, 6, nämlich der Kältetrockner 5, dargestellt ist. Die Funktion und die Zusammenschaltung des gezeigten Kältetrockners 5 mit dem nicht dargestellten Kältetrockner 6 kann aus den zuvor beschriebenen Fig. 1 bis 5 entnommen werden. Weiters werden für jene Teile, die mit den Teilen in den zuvor beschriebenen Fig. übereinstimmen, die selben Bezugszeichen verwendet. Bei Verwendung des dargestellten Kältetrockners 5 wird üblicherweise, aber nicht zwingend, auch der Kältetrockner 6 gleichartig ausgebildet.

Der dargestellte Kältetrockner 5 zum Ansaugen von Gasen 2 für den Verdichter 4 unterscheidet sich von jenen in den zuvor beschriebenen Ausführungsbeispielen dadurch, daß eine Klimazone 109 und eine Kältezone 110 angeordnet ist. Die Klimazone 109 besteht dabei aus drei Wärmetauschern 111 bis 113, wogegen die Kältezone 110 aus vier Wärmetauschern 114 bis 117 besteht. Jeder dieser Wärmetauscher 111 bis 113 und 114 bis 117 besteht aus einer durchgehenden Rohrschlange bzw. Rohrwendel, an der die angesaugte Luft zum Abkühlen vorbeistreicht. Bei der Auslegung und Anordnung der einzelnen Rohrschlangen der einzelnen Wärmetauscher 111 bis 113 und 114 bis 117 ist darauf zu achten, daß diese gleich lang sind und in etwa mit der gleichen Menge an angesaugter Luft in Berührung kommen, sodaß die Wärmeabgabe über die Länge jedes dieser Wärmetauscher 111 bis 117 nahezu gleich groß ist, sodaß sich kein Differenzdruck in den einzelnen Wärmetauschern 111 bis 117 zwischen deren Einlaß und deren Auslaß aufbauen kann.

Die Wärmetauscher 111 bis 113 der Klimazone 109 und die Wärmetauscher 114 bis 117 in der Kältezone 110 werden wiederum über Druckleitungen 118 bis 124 unter Zwischenschaltung von Expansionsventilen 125 bis 131 und Anschlußleitungen 17, 18 verbunden. Weiters werden Druckleitungen 118 bis 124 mit einem oder mehreren Kältemittelverdichtern 23, die wegen der Übersicht nicht dargestellt sind, verbunden. Die Ausgänge der Wärmetauscher 111 bis 117 werden über Saugleitungen 132 bis 138 unter Zwischenschaltung von Magnetventilen 139 bis 145 mit einem oder mehreren Kältemittelverdichtern 23 verbunden, wodurch der Kältemittelkreislauf für das Kältemittel 68 geschlossen ist.

Weiters wird bzw. wurden die Kältemittelverdichter 23 über Bypaßleitungen 146 bis 152 unter Zwischenschaltung eines Magnetventils 153 bis 159 mit den Anschlußleitungen 17, 18 und zwar zwischen den Expansionsventilen 125 bis 131 und den Wärmetauschern 111 bis 117 verbunden.

In Fig. 6 sind auch die Rückleitungen 160 bis 166, die zwischen den Expansionsventilen 125 bis 131 und den Wärmetauschern 111 bis 117 angeschlossen sind, schematisch gezeigt. Diese Rückleitungen 160 bis 166 werden mit dem Ausgang der Wärmetauscher im Kältetrockner 6 unter Zwischenschaltung eines Rückschlagventils verbunden. Am Ausgang der Wärmetauscher 111 bis 117 werden weitere Rückleitungen 167 bis 173, jedoch vor den Magnetventilen 139 bis 145, mit den Saugleitungen 132 bis 138 verbunden. Die Enden der Rückleitungen 167 bis 173 werden unter Zwischenschaltung eines Rückschlagventils 174 bis 180 mit den entsprechenden Eingängen des Wärmetauschers am Kältetrockner 6 verbunden.

Durch die Verbindung der Kältetrockner 5, 6 über die Rückleitungen 160 bis 173 kann nun der Betrieb der Vorrichtung 1, wie er in den zuvor beschriebenen Fig. erläutert wurde, angewendet werden.

Weiters ist darauf zu verweisen, daß sowohl in der Klimazone 109 als auch in der Kältezone 110 eine gleiche Anzahl von Wärmetauschern 111 bis 117 angeordnet sein kann. Es ist selbstverständlich möglich, daß die einzelnen Wärmetauscher 111 bis 117 sowohl einzeln, als auch parallel bzw. zusammen mit der Steuervorrichtung 24 betrieben werden können.

Werden die Wärmetauscher 111 bis 117 von der Steuervorrichtung 24 einzeln angesteuert, so ist es möglich, die Innentemperatur des Kältetrockners 5, 6 durch die Menge der aktiven Wärmetauscher 111 bis 117 zu bestimmen, ohne daß dabei die Menge des zu expandierenden Kältemittels 68 geregelt werden muß. Selbstverständlich ist es möglich, daß beliebig viele Wärmetauscher 15, 16 in den einzelnen Kältetrocknern 5, 6 eingesetzt werden können.

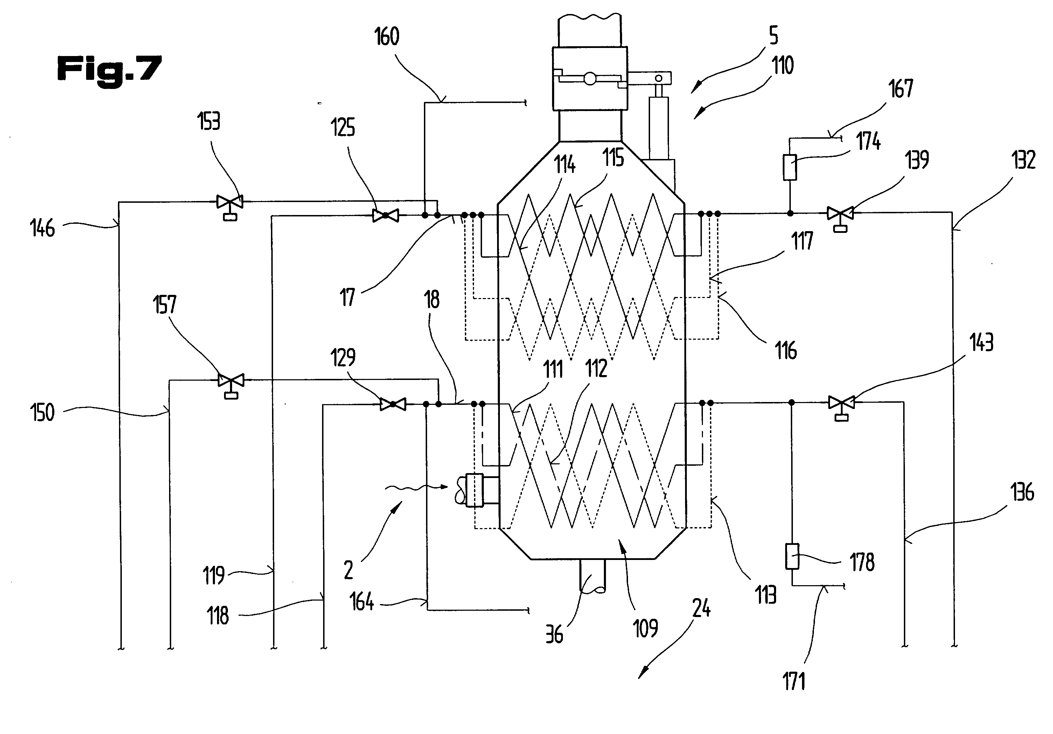

In Fig. 7 ist eine andere Ausführungsvariante der erfindungsgemäßen Lösung, wie sie in Fig. 6 beschrieben ist, gezeigt. Der Übersichtlichkeit wegen wurde wiederum nur ein Kältetrockner 5 bzw. 6, nämlich der Kältetrockner 5, dargestellt. Die Funktion und die Zusammenschaltung des gezeigten Kältetrockners 5 mit dem nicht dargestellten Kältetrockner 6 kann gemäß beliebigen der zuvor in den Fig. 1 bis 6 beschriebenen Ausführungsbeispiele gewählt werden. Weiters wurden für jene Teile, die mit den Teilen in den zuvor beschriebenen Fig. übereinstimmen, die selben Bezugszeichen verwendet. Bei der Verwendung des dargestellten Kältetrockners 5 wird üblicherweise, aber nicht zwingend, auch der Kältetrockner 6 gleichartig ausgebildet und sind üblicherweise zwei Kältetrockner 5, 6 parallel angeordnet, die abwechselnd betrieben werden. Die Vorteile können aber auch bei Verwendung nur eines Kältetrockners 5 oder 6 erreicht werden.

Der Unterschied zu der in Fig. 6 gezeigten Ausführungsvariante liegt nun darin, daß in der Kältezone 110 mehrere Wärmetauscher 114 bis 116 angeordnet sind, die jedoch nur über eine einzige, gemeinsame Anschlußleitung 17 mit dem gasförmigen Kältemittel 68 versorgt werden. Die Anschlußleitung 17 ist wie in den zuvor beschriebenen Ausführungsformen über ein Expansionsventil 125 mit einer Druckleitung 119 an einen Kältemittelverdichter 23 angeschlossen. Der Ausgang der Wärmetauscher 114 bis 116 wird wiederum über eine Saugleitung 132 unter Zwischenschaltung eines Magnetventils 139 mit dem Kältemittelverdichter 23 verbunden, wodurch der Kältemittelkreislauf zum Abkühlen des angesaugten Gases 2 geschlossen ist Die Anspeiseleitungen für die Wärmetauscher 114 bis 116 werden dabei vor Eintritt in den Kältetrockner 5 mit der Anschlußleitung 17 bzw. der Saugleitung 132 verbunden. Bei dieser Ausführungsform ist darauf zu achten, daß die Leitungslänge der einzelnen Wärmetauscher 114 bis 117 sowie der Rohrdurchmesser der Wärmetauscher 114 bis 117 gleich groß sind. Dadurch soll verhindert werden, daß ein Druckunterschied zwischen den einzelnen Wärmetauschern 114 bis 117 entsteht, da sich ansonsten das gasförmige Kältemittel 68 den Weg durch den Wärmetauscher 114 bis 117 mit dem geringsten Widerstand sucht. Daraus folgt, daß die anderen Wärmetauscher 114 bis 117 nicht mit der gleichen Menge an gasförmigem Kältemittel 68 durchströmt werden, wodurch eine Leistungsverminderung die Folge wäre. Weiters ist in Fig. 7 ebenfalls eine Bypaßleitung mit einem Magnetventil 153 dargestellt, die, wie in Fig. 6 beschrieben, an den Kältemittelverdichter 23 angeschlossen ist. Diese Bypaßleitung 146 wird mit der Anschlußleitung 17 und zwar zwischen dem Expansionsventil 125 und der Kreuzung der einzelnen Anschlußleitungen für die Wärmetauscher 114 bis 117 angeschlossen, wodurch ein Abtauen der Wärmetauscher 114 bis 117 möglich ist.

Die Klimazone 109 wird bei diesem Ausführungsbeispiel ebenfalls aus mehreren einzelnen Wärmetauschern 111 bis 113 gebildet, die wiederum über eine einzige Anschlußleitung 18 mit dem Expansionsventil 129 verbunden sind. Das Expansionsventil 129 wird wiederum über eine Druckleitung 118 mit dem selben Kältemittelverdichter 23 oder einen weiteren Kältemittelverdichter 23 verbunden. Der Ausgang der Wärmetauscher 111 bis 113 wird über eine Saugleitung 136 unter Zwischenschaltung eines Magnetventils 143 mit dem selben Kältemittelverdichter 23, der die Druckleitung 118 speist, verbunden. Die Anspeiseleitungen der einzelnen Wärmetauscher 111 bis 113 werden außerhalb des Kältetrockners 5 aufgespleißt, wodurch das Kältemittel wiederum von der Anschlußleitung 18 in die einzelnen Wärmetauscher 111 bis 113 fließen kann. Es ist auch hierbei, wie bereits zuvor beschrieben, zu beachten, daß die Leitungslänge bzw. der Durchmesser der Leitungen der einzelnen Wärmetauscher 111 bis 113 gleich groß ist, um Druckunterschiede zwischen den einzelnen Wärmetauschern 111 bis 113 zu vermeiden. Die Klimazone 109 kann z.B. ebenfalls über eine Bypaßleitung 150 unter Zwischenschaltung eines Magnetventils 157 mit der Anschlußleitung 18 verbunden werden, wodurch ein Abtauen der Klimazone 109 durch Zufuhr von heißem Kältemittelgas über die Bypaßleitung 150 möglich ist.

Weiters weist der Kältetrockner 5, wie in Fig. 6 beschrieben, die Rückleitungen 160, 164, 167 und 168 zum Zusammenschalten mit dem Kältetrockner 6 auf, wodurch das Abtauverfahren, wie es in den zuvor beschriebenen Fig. 1 bis 6 verwendet wurde, eingesetzt werden kann.

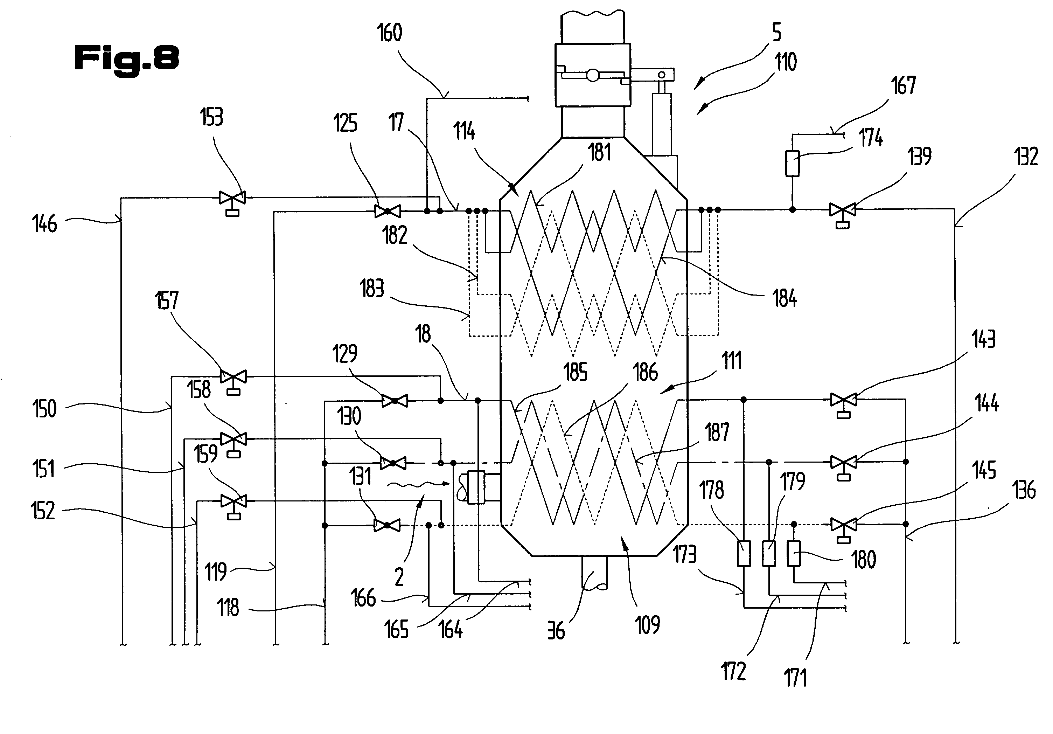

In Fig. 8 ist eine andere Ausführungsvariante gezeigt, die der zuvor anhand der Fig. 6 und 7 beschriebenen Ausführungsform ähnlich ist. Der Übersichtlichkeit wegen wurde wiederum nur einer der zwei Kältetrockner 5, 6, nämlich der Kältetrockner 5, dargestellt. Die Funktion und die Zusammenschaltung des gezeigten Kältetrockners 5 mit dem nicht dargestellten Kältetrokkner 6 kann aus den zuvor beschriebenen Fig. 1 bis 7 entnommen werden. Weiters werden für jene Teile, die mit Teilen in den zuvor beschriebenen Fig. übereinstimmen, dieselben Bezugszeichen verwendet. Bei der Verwendung des dargestellten Kältetrockners 5 wird üblicherweise, aber nicht zwingend, auch der Kältetrokkner 6 gleichartig ausgebildet.

Bei dieser Ausführungsvariante wird die Klimazone 110 aus nur einem Wärmetauscher 114 gebildet. Es ist jedoch auch möglich, daß mehrere Wärmetauscher 114 verwendet werden. Dieser Wärmetauscher 114 wird dabei aus mehreren Kältemittelleitungen 181 bis 184 gebildet, wobei die einzelnen Kältemittelleitungen 181 bis 184 wiederum außerhalb des Kältemitteltrockners 5 mit der Anschlußleitung 17 verbunden sind. Dabei ist jedoch darauf zu achten, daß der Leitungsquerschnitt und die Länge der einzelnen Kältemittelleitungen 181 bis 184 gleich groß ist, um, wie zuvor beschrieben, Druckunterschiede zu vermeiden. Selbstverständlich können beim Einsatz mehrerer Wärmetauscher 114 die Kältemittelleitungen 181 bis 184 in den einzelnen Wärmetauschern 114 unterschiedlich sein, wenn diese über ein eigenes Expanisonsventil 125 angesteuert werden.

Die Anschlußleitung 17 wird wiederum über das Expansionsventil 125 mit der Druckleitung 119 verbunden. Die Druckleitung 119 ist wie in den zuvor beschriebenen Fig. mit dem Kältemittelverdichter 23 verbunden. Der Ausgang des Wärmetauschers 114 wird wiederum über eine Saugleitung 132 unter Zwischenschaltung eines Magnetventils 139 mit dem Kältemittelverdichter 23, der mit der Druckleitung 119 zusammengeschaltet ist, verbunden. Die einzelnen Kältemittelleitungen 181 bis 184 werden dabei zwischen dem Magnetventil 139 und dem Eingang bzw. dem Ausgang des Wärmetauschers 114 mit der Saugleitung 132 verbunden.

Um nun den Wärmetauscher 114 abtauen zu können, wird vom Kältemittelverdichter 23 eine Bypaßleitung 146 unter Zwischenschaltung eines Magnetventils 153 mit der Anschlußleitung 17, und zwar zwischen dem Expansionsventil 125 und der Aufteilung der Anschlußleitung 17 in die einzelnen Kältemittelleitungen 181 bis 184, verbunden.

In der Klimazone 109 ist eine andere Ausführungsvariante eines Wärmetauschers 111 gezeigt. Dabei besteht der Wärmetauscher nun aus drei Kältemittelleitungen 185 bis 187. Die Kältemittelleitungen 185 bis 187 werden dabei über die Anschlußleitung 18 mit jeweils einem Expansionsventil 129 bis 131 verbunden, wodurch die einzelnen Kältemittelleitungen 185 bis 187 verschiedene Längen sowie verschieden große Durchmesser aufweisen können, da durch die Vorordnung der Expansionsventile 129 bis 131 ein genauer Durchfluß des Kältemittels 68 durch die Kältemittelleitungen 185 bis 187 von der Steuervorrichtung 24 geregelt werden kann. Die Expanisonsventile 129 bis 131 sind dabei über die Druckleitung 118 mit einem oder mehreren Kältemittelverdichtern 23 verbunden.

Am Ausgang des Wärmetauschers 111 werden die Kältemittelleitungen 185 bis 187 mit den Magnetventilen 143 bis 145 verbunden. Anschließend werden die Ausgänge der Magnetventile 143 bis 145 mit der Saugleitung 136 verbunden, die wiederum mit dem Kältemittelverdichter 23 verbunden ist.

Gleichzeitig weist z.B. jede Kältemittelleitung 185 bis 187 eine eigene Bypaßleitung 150 bis 152 mit den zwischengeschalteten Magnetventilen 157 bis 159 auf, wodurch die Klimazone 109 ebenfalls abgetaut werden kann. Weiters werden die einzelnen Anschlußleitungen 17, 18, sowie die Kältemittelleitungen 185 bis 187 mit den Rückleitungen 160, 164 bis 166, 167, 171 bis 173 verbunden, wodurch das zuvor beschriebene Verfahren angewendet werden kann.

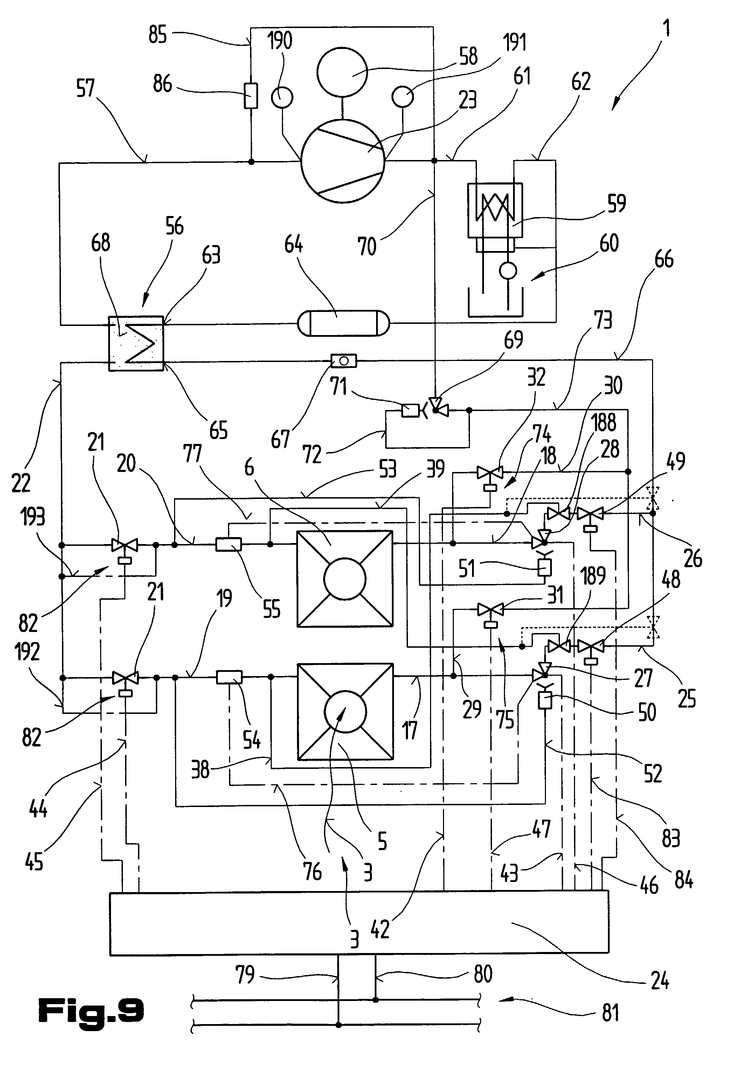

Fig. 9 zeigt eine abgeänderte Ausführungsvariante der in den Fig. 2 und 3 beschriebenen Vorrichtung 1 und es werden daher für die selben Teile wie in den Fig. 2 und 3 die selben Bezugszeichen verwendet.

Der Unterschied zu der in Fig. 2 und 3 beschriebenen Ausführungsvariante liegt darin, daß bei der Vorrichtung 1 die von den Kältetrocknern 5, 6 weggeführten Rückleitungen 38, 39 über ein Venturiventil 188, 189 an die Druckleitungen 25, 26 angeschlossen sind. D.h. daß die Rückleitungen 38, 39 nicht mehr in die Anschlußleitungen 17, 18 münden, sondern zwischen den Expansionsventilen 27, 28 und den Magnetventilen 48, 49 angeordnet sind. Es ist aber auch möglich, wie in strichlierten Linien dargestellt, daß die Rückleitungen 38, 39 vor den Magnetventilen 48, 49 mit der Druckleitung 66 verbunden sind.

Durch die Verbindung der Rückleitungen 38, 39 mit den Druckleitungen 25, 26 bzw. der Druckleitung 66 ist es erforderlich, die Anordnung des Venturiventils 188, 189 vorzunehmen, da der Druck in den Druckleitungen 25, 26 erheblich höher ist, als der Druck in den Rückleitungen 38, 39. Durch die Anordnung der Venturiventile 188, 189 wird in den Rückleitungen 38, 39 ein Unterdruck erzeugt, wodurch das flüssige Kältemittel 68, daß beim Abtauen der Kältetrockner 5, 6 am Ausgang der Wärmetauscher 15, 16 austritt, in die Druckleitungen 25, 26 angesaugt wird. Das Abtauen der Wärmetauscher 15, 16 bzw. das Abkühlen des angesaugten Gases 2 erfolgt wie in Fig. 1 oder 5 beschrieben.

Weiters wird am Kältemittelverdichter 23 der Druck des gasförmigen Kältemittels 68 in der Saugleitung 57 direkt am Eingang durch eine Druckmeßvorrichtung 190 erfaßt. Gleichzeitig kann jedoch auch am Ausgang des Kältemittelverdichters 23 ebenfalls der Druck in der Leitung 61 des komprimierten gasförmigen Kältemittels 68 durch eine Druckmeßvorrichtung 191 erfaßt werden. Ist zwischen dem Eingang und dem Ausgang des Kältemittelverdichters 23 ein zu hoher Druckunterschied vorhanden, so kann die Steuervorrichtung 24 eine undichte Stelle im Leitungssystem der Vorrichtung 1 erkennen und gegebenenfalls die Vorrichtung 1 abschalten. Diese Sicherheitsschaltung verhindert, daß der Kältemittelverdichter 23 Gase 2 aus der Atmosphäre ansaugt, die mit Wasser gesättigt sind, wodurch ein Wasserschlag am Kältemittelverdichter 23 vermieden wird.

Selbstverständlich ist es möglich, daß die Druckmeßvorrichtungen 190 und 191 an einer anderen beliebigen Stelle des Leitungssystems der Vorrichtung 1 angeordnet sind. Der Vorteil der Anordnung der Druckmeßvorrichtungen 190, 191 direkt am Kältemittelverdichter 23 liegt darin, daß durch das Leitungssystem der Druck des Kältemittels 68 leicht verändert wird und somit bei einer Anordnung an einer anderen beliebigen Stelle des Leitungssystems ein falsches Meßergebnis auftreten könnte.

Weiters ist in Fig. 9 eine andere Ausführungsform der Rückfuhr des Kältemittels 68 gezeigt. Diese Variante umfaßt Schnüffelleitungen 192, 193, die strichpunktiert dargestellt sind. Die Schnüffelleitungen 192, 193 sind mit der Saugleitung 19, 20 und mit der weiteren Saugleitung 22 verbunden, wodurch die Magnetventile 21 in den Saugleitungen 19, 20 überbrückt werden. Bei dieser Ausführungsform ist es nicht erforderlich, daß die Rückleitungen 38, 39 vorhanden sind, da das abgekühlte, flüssige Kältemittel 68, daß zum Abtauen der Kältetrockner 5, 6 verwendet wird, nun über die Schnüffelleitungen 192, 193 direkt in die Saugleitung 22 strömen kann. Durch den Druckunterschied in der Saugleitung 22 und in der Schnüffelleitung 192 bzw. 193 wird das flüssige Kältemittel 68 wiederum gasförmig und kann somit vom Kältemittelverdichter 23 angesaugt werden, ohne daß dabei ein Wasserschlag am Kältemittelverdichter 23 entstehen würde.

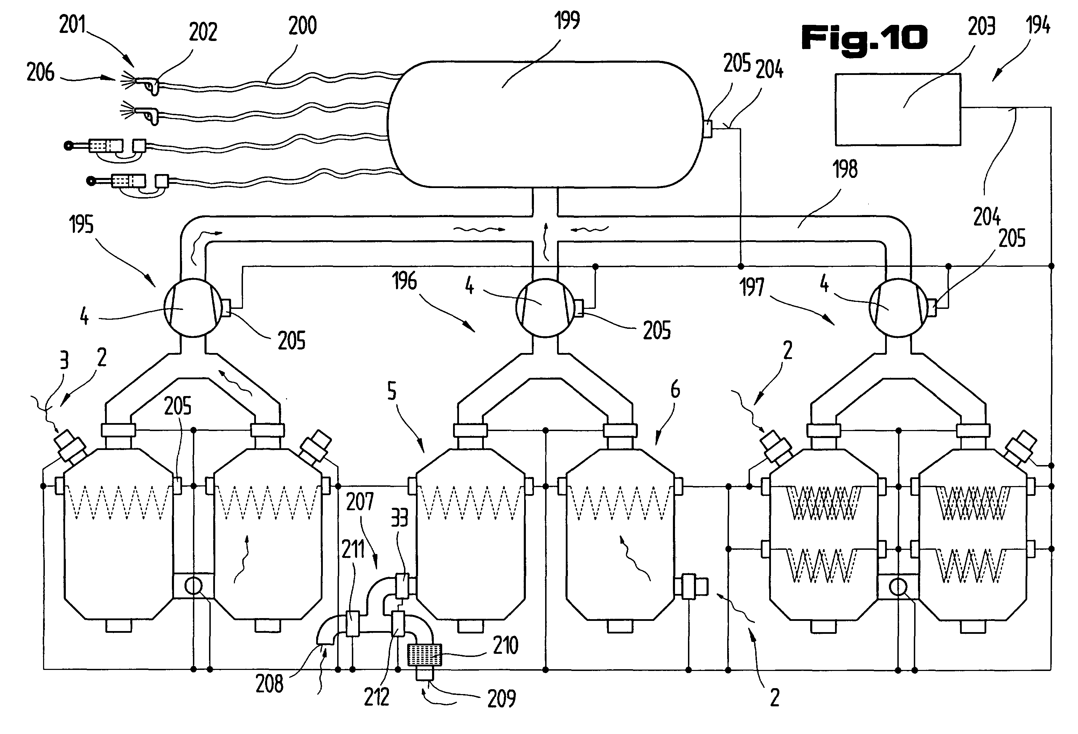

In Fig. 10 ist eine Druckluftanlage 194 gezeigt. Die Druckluftanlage 194 besteht dabei aus mehreren einzelnen Vorrichtungen 195 bis 197, wobei die Ausführungen der einzelnen Vorrichtungen 195 bis 197 den zuvor in den Fig. 1 bis 7 beschriebenen Vorrichtungen 1 entsprechen können. Die Vorrichtungen 195 bis 197 sind über Sammelleitungen 198 mit einem Drucklufttank 199 verbunden. Am Drucklufttank 199 sind über Schläuche 200 Verbraucher 201 angeschlossen, die beispielsweise durch Druckluftpistolen 202 oder Gas bzw. Ölbrennern in Kraftwerken oder durch andere Druckluftverbraucher gebildet sein können.

Eine Zentral-Steuereinheit 203 ist über ein Bussystem 204 mit den einzelnen Stellgliedern 205 verbunden, wobei jede Vorrichtung 195 bis 197 mehrere Stellglieder 205 aufweisen kann, die wie in den zuvor beschriebenen Fig. die Funktionen der einzelnen Vorrichtungen 195 bis 197 steuern. Weiters sind Stellglieder 205 an den Verdichtern 4 der Vorrichtungen 195 bis 197 und am Drucklufttank 199 angeordnet, um das Ein- und Ausschalten der Vorrichtung 195 bis 197 sowie den Druck im Drucklufttank 199 von der Zentral-Steuereinheit 203 steuern bzw. regeln zu können.

Wird die Druckluftanlage 194 in Betrieb genommen, so überprüft die Zentral-Steuereinheit 203 über das Bussystem 204 und das Stellglied 205 des Drucklufttanks 199 das Volumen bzw. den Druck der Druckluft im Drucklufttank 199 und mißt gleichzeitig den Druckluftverbrauch der Druckluft 206 am Ausgang des Drucklufttanks 199 durch die Verbraucher 201. Nachdem die Zentral-Steuereinheit 203 den Druck bzw. das Volumen der Druckluft im Drucklufttank 199 und den Verbrauch 201 der Druckluft 206 erfaßt hat, steuert die Zentral-Steuereinheit 203 über das Bussystem 204 die einzelnen Vorrichtungen 195 bis 197 an, d.h. daß bei maximalem Verbrauch von Druckluft 206 die Zentral-Steuereinheit 203 alle Vorrichtungen 195 bis 197 einschaltet. Wird jedoch weniger Druckluft 206 verbraucht, so kann die Zentral-Steuereinheit 203 die Vorrichtungen 195 bis 197 einzeln ansteuern, wodurch das Volumen des über die einzelnen Vorrichtungen 195 bis 197 angesaugten Gases 2 gesteuert werden kann.

Es ist auch möglich, bei der Druckluftanlage 194 verschiedene Vorrichtungen 195 bis 197 mit verschiedenen Kapazitäten zusammenzuschalten, wodurch eine Steuerung des Verbrauches bzw. der zu erzeugenden Druckluft 206 genauer geregelt werden kann, da durch Abstufung der Vorrichtungen 195 bis 197 eine Anpassung an den Verbrauch von Druckluft 206 an die Verbraucher 201 exakt erfolgen kann.

Stellt die Zentral-Steuereinheit 203 z.B. fest, daß von dem Verbraucher 201 weniger Druckluft 206 benötigt wird, so steigt der Druck im Drucklufttank 199 an, wodurch die Zentral-Steuereinheit 203 eine der Vorrichtungen 195 bis 197, z.B. die Vorrichtung 195 abschaltet und somit weniger Druckluft erzeugt wird, wodurch die erzeugte Menge an Druckluft 206 an dem Verbrauch der Verbraucher 201 angepaßt ist. Wird jedoch wiederum mehr Druckluft 206 am Verbraucher 201 benötigt, so sinkt der Druck der Druckluft 206 im Drucklufttank 199, wodurch die Zentral-Steuereinheit 203 den Druckverlust über das Stellglied 205 ermittelt und anschließend über das Bussystem 204 die Vorrichtung 195 wieder in Betrieb nimmt.

Vorteilhaft ist bei dieser Ausgestaltung der Druckluftanlage 194, daß mehrere Vorrichtungen 195 bis 197 mit verschiedenen Bauarten sowie mit verschiedenen Kapazitäten eingesetzt werden können, wodurch eine rasche und genaue Anpassung des Druckluftverbrauchs zur Herstellung der Druckluft 206 ermöglicht wird.

Selbstverständlich ist es auch möglich, daß die Vorrichtungen 195 bis 197 jeweils eine eigene Steuervorrichtung 24 aufweisen, wodurch jede Vorrichtung 195 bis 197 von seiner eigenen Steuervorrichtung 24 gesteuert wird. Weiters ist es auch möglich, daß die Zentral-Steuereinheit 203 über ein Bussystem 204 mit mehreren dezentralen Steuervorrichtungen 24, die den einzelnen Vorrichtungen 195 bis 197 zugeordnet sind, zusammenarbeitet. Die dezentralen Steuervorrichtungen 24 übernehmen dann die Regelung der Vorrichtungen 195 bis 197 und nur die übergeordneten Steuerfunktionen, wie beispielsweise die Festlegung, wieviele der Vorrichtungen 195 bis 197 in Betrieb genommen werden, bzw. eine zentrale Erfassung der Leistungsdaten und die Visualisierung der Betriebszustände der einzelnen Vorrichtungen 195 bis 197 bzw. des Gesamtsystems in Echtzeit bzw. die dazu notwendigen Auswertungen. Selbstverständlich kann die Zentral-Steuereinheit 203 auch durch entsprechende Mikroprozessoren, beispielsweise handelsübliche Personalcomputer mit Grafikterminals oder dgl., gebildet sein.

Weiters ist in Fig. 10 eine Ansaugvorrichtung 207 zum Ansaugen des Gases 2 gezeigt. Diese Ansaugvorrichtung 207 kann für alle vorgenannten Ausführungsbeispiele der Fig. 1 bis 9 verwendet werden.

Die Ansaugvorrichtung 207 weist dabei zwei Öffnungen 208, 209 zum Ansaugen des Gases 2 auf, wobei die Öffnung 208 direkt in den Kältetrockner 5 und die andere Öffnung 209 über einen Partikelfilter 210 in den Kältetrockner 5 führt. Die Öffnungen 208, 209 können dabei durch Ansteuern von in den Rohren befindlichen Verschlußklappen 211, 212 von der Zentral-Steuereinheit 203 geöffnet oder geschlossen werden, d.h. daß beim Ansteuern der Verschlußklappe 211 und der Verschlußklappe 33 die Öffnung 208 aktiviert ist und beim Ansteuern der Verschlußklappe 212 mit der Verschlußklappe 33 das Gas 2 über den Partikelfilter 210 angesaugt wird. Dies hat den Vorteil, daß die im Gas 2 enthaltenen Schmutzpartikeln im Partikelfilter 210 ausgefiltert werden. Der Partikelfilter muß dann aktiviert werden, wenn das angesaugte Gas 2 zu wenig Feuchtigkeit bzw. Wasser enthält, um die Oberflächen der Wärmetauscher zu benetzen, sodaß die Schmutzpartikeln selbständig ausgeschieden werden. Dies triff dann zu, wenn das Gas 2 eine gegenüber der geplanten Ansaugtemperatur niedrige Temperatur, wie z.B. im Winter, aufweist.

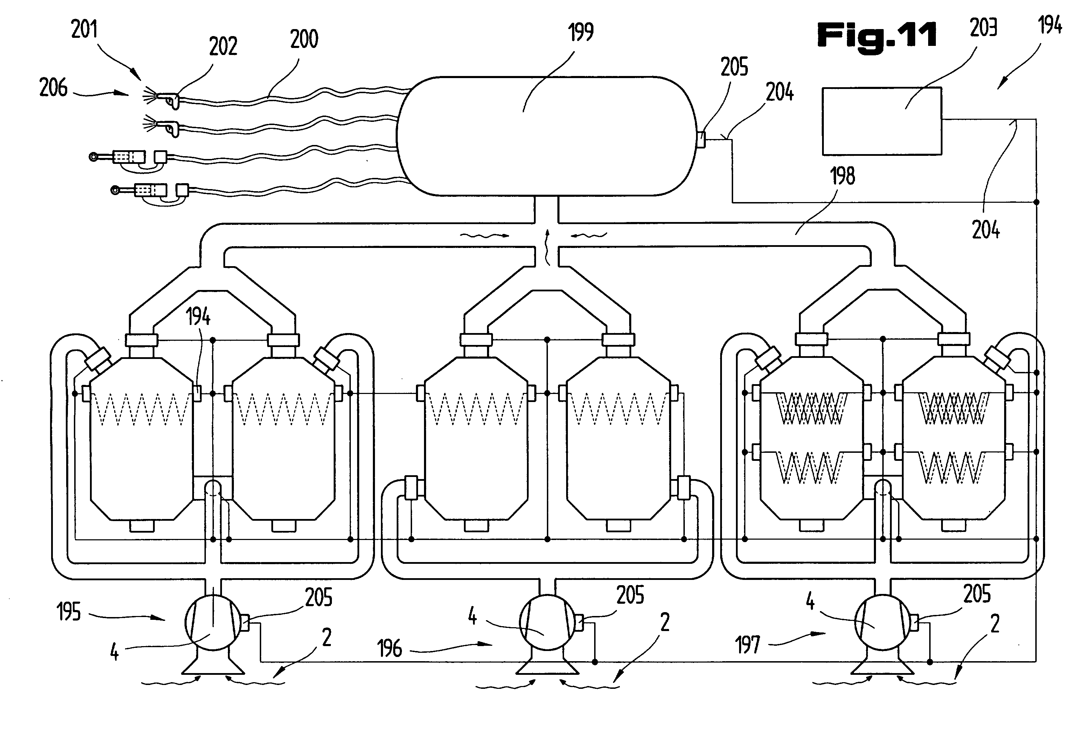

Weiters ist in Fig. 11 eine andere Ausführungsform der in Fig. 10 gezeigten Druckluftanlage 194 gezeigt, wobei für die selben Teile die selben Bezugszeichen verwendet werden.

Der Unterschied zu der in Fig. 10 gezeigten Druckluftanlage 194 liegt darin, daß die Verdichter 4 zum Ansaugen des Gases 2 nicht mehr, wie in Fig. 10 beschrieben, über die Kältetrockner 5, 6 angesaugt werden, sondern daß die Verdichter 4 zuerst ein Gas 2 aus der Atmosphäre ansaugen, dieses komprimieren und anschließend über die Kältetrockner 5, 6 auf eine gewisse Temperatur abkühlen. Weiters wird in den Kältetrocknern 5, 6 der Wasserdampf, der in der Atmosphäre bzw. im Gas 2 enthalten ist, ausgeschieden. Die abgekühlte Luft wird dann von den einzelnen Vorrichtungen 195 bis 197 in den Drucklufttank 199 weitergeleitet, von dort kann sie dann zum Verbraucher 201 weitergeleitet werden.

Es ist auch möglich, daß sowohl auf der Saugseite der Verdichter 4 als auch auf der Druckseite der Verdichter 4 die Vorrichtungen 195 bis 197 angeordnet werden.

Selbstverständlich ist es auch möglich, nur einem Kältetrockner 5 oder 6 einen Verdichter 4 für ein Gas 2 nachzuordnen und nicht mehrere parallel geschaltete Vorrichtungen mit mehreren parallel geschalteten Verdichtern 4, wie dies in Fig. 1 dargestellt ist, anzuordnen.

Damit ist ein Einsatz der erfindungsgemäßen Kältetrockner 5, 6 auch bei kleineren Anlagen, nicht nur im Ansaugbereich, also vor dem Verdichter 4, sondern auch im Druckbereich, nach dem Ausgang des Verdichters 4, möglich.

Die Vorteile der vorliegenden Erfindung und die darin beschriebenen Maßnahmen können bei den unterschiedlichsten Arten von Verdichtern für Gase 2, wie beispielsweise bei Schraubenverdichtern, Kolbenverdichtern, Radialverdichtern oder dgl., erzielt werden.

Zur Darstellung der wesentlichen Funktion der erfindungsgemäßen Vorrichtungen 1 bzw. der Druckluftanlage 194 wurden vereinfachte Schaltungssymbole verwendet und überdies nicht funktionswesentliche Teile, wie Drosselventile und sonstige Bauteile, weggelassen, deren Anordnung im Bereich des Fachwissens des auf diesem Gebiet tätigen Fachmannes, z.B. eines Kältetechnikers, liegen. Es können für einzelnen Bauteile jeweils beliebige aus dem Stand der Technik bekannte Einzelelemente, insbesondere für die Expansionsventile 27, 28, 99, 100, Kältemittelverdichter, Kondensatoren bzw. Wärmetauscher, verwendet werden.

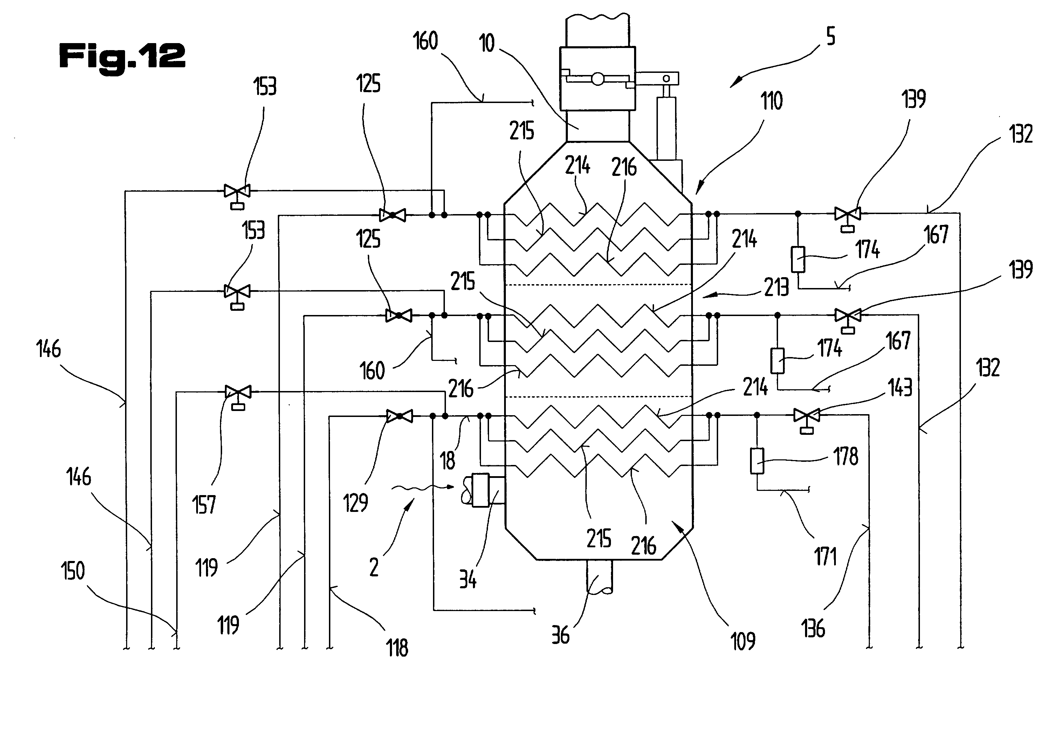

In Fig. 12 ist eine weitere Ausführungsform der erfindungsgemäßen Lösung gezeigt. Der Übersichtlichkeit wegen wurde wiederum nur ein Kältetrockner 5 bzw. 6, nämlich der Kältetrockner 5, dargestellt, wobei für die selben Teile die selben Bezugszeichen, wie sie in den zuvor beschriebenen Fig. 1 bis 11 enthalten sind, verwendet werden.

Die Funktion und die Zusammenschaltung des gezeigten Kältetrockners 5 mit dem nicht dargestellten Kältetrockner 6 kann beliebig aus einem der zuvor beschriebenen Ausführungsbeispielen der Fig. 1 bis 11 ausgewählt werden. Bei der Verwendung des dargestellten Kältetrockners 5 wird üblicherweise, aber nicht zwingend, auch der Kältetrockner 6 gleichartig ausgebildet und sind üblicherweise zwei Kältetrockner 5, 6 parallel angeordnet, die wiederum abwechselnd betrieben werden.

Der Unterschied zu den in den zuvor beschriebenen Fig. 1 bis 11 gezeigten Ausführungsbeispielen liegt nunmehr darin, daß der Kältetrockner 5 aus mehreren Zonen, insbesondere der Kältezone 110 sowie der Klimazone 109 und eine zwischen der Kältezone 110 und der Klimazone 109 angeordneten Zwischenzone 213, gebildet wird. In der Kältezone 110 sind mehrere Wärmetauscher 214 bis 216 angeordnet. Die Wärmetauscher 214 bis 216 sind in Strömungsrichtung des angesaugten Gases 2, bevorzugt vertikal, übereinander angeordnet. Die Wärmetauscher 214 bis 216 in der Zwischenzone 213 und der Klimazone 109 sind gleichartig angeordnet. Vorteilhaft ist bei dieser Anordnung der Wärmetauscher 214 bis 216, daß beim Vorbeiströmen des Gases 2 über einen größeren Bereich eine bessere Abkühlung des Gases 2 erreicht wird. Durch die Anordnung der Wärmetauscher 214 bis 216 in den einzelnen Zonen in Durchströmrichung hintereinander wird weiters erreicht, daß im Kältetrockner 5 zwischen Ansaugstutzen 34 und Auslaß 10 ein gleichmäßig ansteigendes Abkühlen des Gases 2 erfolgt, sodaß im Inneren des Kältetrockners 5 zwischen den einzelnen Zonen keine großen Temperaturunterschiede auftreten können.

Die Ansteuerung der Wärmetauscher 214 bis 216 kann dabei beispielsweise wie in Fig. 7 beschrieben erfolgen. Es ist selbstverständlich möglich, daß jede andere Ausführungsvariante der zuvor beschriebenen Fig. 1 bis 11 zum Ansteuern der Wärmetauscher 214 bis 216 verwendet werden kann. Weiters ist es auch möglich, daß parallel zu den einzelnen Wärmetauschern 214 bis 216 weitere Wärmetauscher 214 bis 216 in der gleichen Ebene angeordnet sind, sodaß über den Querschnittsbereich des Kältetrockners 5 verteilt in einer zur Strömungsrichtung vertikalen Ebene bzw. in mehreren in Strömungsrichtung hintereinander liegenden Ebenen jeweils mehrere Wärmetauscher 214 bis 216 angeordnet sind.

Ein weiterer Vorteil bei dieser dargestellten Ausführungsvariante liegt darin, daß durch Anordnung der Zwischenzone 213 der Zwischenbereich zwischen der Kältezone 110 und der Klimazone 109 als weitere Abkühlstufe verwendet werden kann, sodaß nunmehr drei unterschiedliche Zonen mit unterschiedlichen Temperaturen im Kältetrockner 5 angeordnet sind. Selbstverständlich ist es auch möglich, daß auch weitere einzelne Zonen im Kältetrockner 5 angeordnet werden, sodaß eine feinere Abstimmung der Temperatur von der Klimazone 109 bis zur Kältezone 110 erreicht wird.

Die Ansteuerung der Zwischenzone 213 entspricht dabei der Ansteuerung der Kältezone 110, wie sie in Fig. 7 beschrieben wurde, wobei für die selben Teile die selben Bezugszeichen, wie sie in Fig. 7 verwendet wurden, für die Zwischenzone 213 verwendet werden. Weiters sei erwähnt, daß die Ansteuerung der einzelnen Wärmetauscher 214 bis 216 jeweils eigenständig erfolgen kann.

### Bezugszeichenaufstellung

- 1: Vorrichtung
- 2: Gas
- 3: Pfeil
- 4: Verdichter
- 5: Kältetrockner

- 6: Kältetrockner
- 7: Ansaugleitung
- 8: Ansaugleitung
- 9: Ansaugstutzen
- 10: Auslaß

- 11: Auslaß
- 12: Verschlußklappe
- 13: Verschlußklappe
- 14: Antrieb
- 15: Wärmetauscher

- 16: Wärmetauscher
- 17: Anschlußleitung
- 18: Anschlußleitung
- 19: Saugleitung
- 20: Saugleitung

- 21: Magnetventil
- 22: Saugleitung
- 23: Kältemittelverdichter
- 24: Steuervorrichtung
- 25: Druckleitung

- 26: Druckleitung
- 27: Expansionsventil
- 28: Expansionsventil
- 29: Bypaßleitung
- 30: Bypaßleitung

- 31: Magnetventil
- 32: Magnetventil
- 33: Verschlußklappe
- 34: Ansaugstutzen
- 35: Verbindungsleitung

- 36: Abfluß
- 37: Verschlußklappe
- 38: Rückleitung
- 39: Rückleitung
- 40: Rückschlagventil

- 41: Rückschlagventil
- 42: Steuerleitung
- 43: Steuerleitung
- 44: Steuerleitung
- 45: Steuerleitung

- 46: Steuerleitung
- 47: Steuerleitung
- 48: Magnetventil
- 49: Magnetventil
- 50: Drucksensor

- 51: Drucksensor
- 52: Druckleitung
- 53: Druckleitung
- 54: Temperaturfühler
- 55: Temperaturfühler

- 56: Wärmetauscher
- 57: Saugleitung
- 58: Motor
- 59: Kondensator
- 60: Kühlwasserkreislauf

- 61: Leitung
- 62: Leitung
- 63: Eingang
- 64: Flüssigkeitswandler
- 65: Ausgang

- 66: Druckleitung
- 67: Schauglas
- 68: Kältemittel
- 69: Heißgasregler
- 70: Leitung

- 71: Drucksensor
- 72: Druckleitung
- 73: Bypaßleitung
- 74: Antrieb
- 75: Antrieb

- 76: Steuerleitung
- 77: Steuerleitung
- 78: Steuerleitung
- 79: Zuleitung
- 80: Zuleitung

- 81: Stromquelle
- 82: Antrieb
- 83: Steuerleitung
- 84: Steuerleitung
- 85: Bypaßleitung

- 86: Über- und Unterdruckregelventil
- 87: Kennlinie
- 88: Kennlinie
- 89: Zeitpunkt
- 90: Zeitpunkt

- 91: Zeitpunkt
- 92: Zeitpunkt
- 93: Zeitpunkt
- 94: Temperaturfühler
- 95: Wärmetauscher

- 96: Wärmetauscher
- 97: Anschlußleitung
- 98: Anschlußleitung
- 99: Expansionsventil
- 100: Expansionsventil

- 101: Magnetventil
- 102: Magnetventil
- 103: Saugleitung
- 104: Saugleitung
- 105: Steuerleitung

- 106: Steuerleitung
- 107: Steuerleitung
- 108: Steuerleitung
- 109: Klimazone
- 110: Kältezone

- 111: Wärmetauscher
- 112: Wärmetauscher
- 113: Wärmetauscher
- 114: Wärmetauscher
- 115: Wärmetauscher

- 116: Wärmetauscher
- 117: Wärmetauscher
- 118: Druckleitung
- 119: Druckleitung
- 120: Druckleitung

- 121: Druckleitung
- 122: Druckleitung
- 123: Druckleitung
- 124: Druckleitung
- 125: Expansionventil

- 126: Expansionventil
- 127: Expansionventil
- 128: Expansionventil
- 129: Expansionventil
- 130: Expansionventil

- 131: Expansionventil
- 132: Saugleitung
- 133: Saugleitung
- 134: Saugleitung
- 135: Saugleitung

- 136: Saugleitung
- 137: Saugleitung
- 138: Saugleitung
- 139: Magnetventil
- 140: Magnetventil

- 141: Magnetventil
- 142: Magnetventil
- 143: Magnetventil
- 144: Magnetventil
- 145: Magnetventil

- 146: Bypaßleitung
- 147: Bypaßleitung
- 148: Bypaßleitung
- 149: Bypaßleitung
- 150: Bypaßleitung

- 151: Bypaßleitung
- 152: Bypaßleitung
- 153: Magnetventil
- 154: Magnetventil
- 155: Magnetventil

- 156: Magnetventil
- 157: Magnetventil
- 158: Magnetventil
- 159: Magnetventil
- 160: Rückleitung

- 161: Rückleitung
- 162: Rückleitung
- 163: Rückleitung
- 164: Rückleitung
- 165: Rückleitung

- 166: Rückleitung
- 167: Rückleitung
- 168: Rückleitung
- 169: Rückleitung
- 170: Rückleitung

- 171: Rückleitung
- 172: Rückleitung
- 173: Rückleitung
- 174: Rückschlagventil
- 175: Rückschlagventil

- 176: Rückschlagventil
- 177: Rückschlagventil
- 178: Rückschlagventil
- 179: Rückschlagventil
- 180: Rückschlagventil

- 181: Kältemittelleitung
- 182: Kältemittelleitung
- 183: Kältemittelleitung
- 184: Kältemittelleitung
- 185: Kältemittelleitung

- 186: Kältemittelleitung
- 187: Kältemittelleitung
- 188: Venturiventil
- 189: Venturiventil
- 190: Druckmeßvorrichtung

- 191: Druckmeßvorrichtung
- 192: Schnüffelleitung
- 193: Schnüffelleitung
- 194: Druckluftanlage
- 195: Vorrichtung

- 196: Vorrichtung
- 197: Vorrichtung
- 198: Sammelleitung
- 199: Drucklufttank
- 200: Schlauch

- 201: Verbraucher
- 202: Druckluftpistolen
- 203: Zentral-Steuereinheit
- 204: Bussystem
- 205: Stellglied

- 206: Druckluft
- 207: Ansaugvorrichtung
- 208: Öffnung
- 209: Öffnung
- 210: Partikelfilter

- 211: Verschlußklappe
- 212: Verschlußklappe
- 213: Zwischenzone
- 214: Wärmetauscher
- 215: Wärmetauscher

- 216: Wärmetauscher

## Patentansprüche

1. Verfahren zum Kühlen von Gasen, insbesondere einer durch zumindest einen Verdichter angesaugten Luft, in einer Druckluftanlage, bei welchem das Gas wechselweise durch zumindest einen von mehreren mit von Kältemittel durchströmten Wärmetauschern ausgestatteten Kältetrocknern hindurchströmt und in einer Kühlstrecke mittels eines Wärmetauschers, durch den ein Kältemittel hindurchströmt, unter 0°C abgekühlt wird und während der Abkühlung des Gases durch zumindest einen der Kältetrockner in dem oder den weiteren Kältetrocknern durch Zufuhr eines heißen Kältemitteldampfes, welches den Wärmetauscher im Kältetrockner durchströmt, das Eis, welches durch das aus dem angesaugten Gas ausgeschiedene Kondensat entsteht, abgetaut wird, wobei der heiße, gasförmige Kältemitteldampf beim Durchtritt durch den oder die abzutauenden Kältetrockner verflüssigt und das flüssige Kältemittel in den Kältemittelkreislauf rückgeführt wird, dadurch gekennzeichnet, daß das aus dem oder den abzutauenden Kältetrocknern austretende flüssige Kältemittel durch einen mit dem von einem Kondensator zu einem Expansionsventil fließenden flüssigen Kältemittel in einem Venturiventil erzeugten Unterdruck angesaugt oder zwischen dem Expansionsventil und dem zum Abkühlen des angesaugten Gases geschalteten Wärmetauscher dem expandierten, gasförmigen Kältemittel zugemischt wird, wobei eine Ist-Temperatur und ein Ist-Druck des von dem zum Abkühlen des angesaugten Gases eingesetzten Wärmetauscher austretenden Kältemittels ermittelt und mit einer Soll-Temperatur und einem Soll-Druck des Kältemittels verglichen wird, wobei das Kältemittel beim Durchströmen des zum Abkühlen des angesaugten Gases im Kältetrockner angeordneten Wärmetauschers nur soweit abgekühlt wird, daß dessen Ist-Temperatur bei dem Soll-Druck am Austritt aus dem Wärmetauscher höher ist als die dem Soll-Druck entsprechende Temperatur.

2. Verfahren nach Anspruch 1, dadurch gekennzeichnet, daß die Ist-Temperatur und/ oder der Ist-Druck des vom Verdichter angesaugten Gases ermittelt und mit der Soll-Temperatur und/oder dem Soll-Druck des Gases verglichen wird und die Menge des durch das Expansionsventil zum Wärmetauscher hindurchströmende Kältemittels zur Beseitigung der Differenz zwischen der Soll- und Ist-Temperatur und/ oder dem Ist- und Soll-Druck geregelt wird.

3. Verfahren nach einem der Ansprüche 1 oder 2, dadurch gekennzeichnet, daß die Menge des durch das Expansionsventil durchströmenden Kältemittels bei zu geringer Ist-Temperatur des angesaugten Gases erhöht wird.

4. Verfahren nach einem oder mehreren der Ansprüche 1 bis 3, dadurch gekennzeichnet, daß ein Druck des Kältemittels in einer Rückleitung höher ist, als ein Druck des Kältemittels in einer Anschlußleitung.

5. Verfahren nach einem oder mehreren der Ansprüche 1 bis 4, dadurch gekennzeichnet, daß eine einer Bypaßleitung eines Kältemittelverdichters zugeführte Menge an heißem, flüssigem Kältemittel kleiner als 50 %, bevorzugt kleiner 20 %, der Gesamtfördermenge des Kältemittelverdichters ist.

6. Verfahren nach einem oder mehreren der Ansprüche 1 bis 5, dadurch gekennzeichnet, daß das Kältemittel aus dem oder den abzutauenden Wärmetauschern zwischen dem Kondensator und dem Expansionsventil in die Druckleitung eingespeist wird.

7. Verfahren nach einem oder mehreren der Ansprüche 1 bis 6, dadurch gekennzeichnet, daß das aus dem oder den abzutauenden Wärmetauschern über eine Rückleitung zugeführte flüssige Kältemittel in jenem Bereich in eine Druckleitung eingespeist wird, in welchem der Druck des flüssigen Kältemittels gleich oder kleiner ist, als der des von dem oder den abzutauenden Wärmetauschern kommenden Kältemittels.

8. Verfahren nach einem oder mehreren der Ansprüche 1 bis 7, dadurch gekennzeichnet, daß das vom Verdichter angesaugte Gas über zwei in Strömungsrichtung hintereinander angeordnete Wärmetauscher hindurchgeführt wird.

9. Verfahren nach Anspruch 8, dadurch gekennzeichnet, daß das Gas beim Durchtritt durch den ersten, bevorzugt eine Klimazone bildenden Wärmetauscher bei einer Ansaugtemperatur des Gases von + 20°C auf eine Temperatur von gleich oder größer als - 10°C, bevorzugt größer als + 2°C, abgekühlt wird und daß mit dem dahinter angeordneten Wärmetauscher das angesaugte Gas auf eine Temperatur unterhalb von - 10°C, bevorzugt unterhalb von -30°C, abgekühlt wird.

10. Verfahren nach Anspruch 9, dadurch gekennzeichnet, daß das angesaugte Gas in der Klimazone nur soweit abgekühlt wird, daß das anfallende Kondensat flüssig bleibt.

11. Verfahren nach einem oder mehreren der Ansprüche 1 bis 10, dadurch gekennzeichnet, daß das Kältemittel zwischen dem Expansionsventil und der Saugleitung in mehreren Teilströmen durch den Wärmetauscher hindurchgeführt wird.

12. Verfahren nach Anspruche 11, dadurch gekennzeichnet, daß der Druck in jedem Teilstrom des Kältemittels über ein eigenes Expansionsventil festgelegt bzw. geregelt wird.

13. Verfahren nach einem oder mehreren der Ansprüche 1 bis 12, dadurch gekennzeichnet, daß den Wärmetauschern in der Klimazone und der Kältezone unterschiedliche, bevorzugt mehrere Kältemittelverdichter zugeordnet sind.

14. Verfahren nach einem oder mehreren der Ansprüche 1 bis 13, dadurch gekennzeichnet, daß die Wärmetauscher der Klimazone und/oder der Kältezone während des Abtauvorganges mit heißem, gasförmigen Kältemittel angespeist werden.

15. Verfahren nach einem oder mehreren der Ansprüche 1 bis 14, dadurch gekennzeichnet, daß das Kältemittel z.B. bei R22 bei einem Druck von 13,5 bar und auf eine Temperatur von +70°C bis +105°C, bevorzugt +80°C bis +90°C, erhitzt wird.

16. Verfahren nach einem oder mehreren der Ansprüche 1 bis 15, dadurch gekennzeichnet, daß durch die Abkühlung des gasförmigen Kältemittels im Kondensator auf eine Temperatur zwischen +25°C und +60°C, bevorzugt +30°C, das Kältemittel verflüssigt wird.

17. Verfahren nach einem oder mehreren der Ansprüche 1 bis 16, dadurch gekennzeichnet, daß in einem Wärmetauscher zwischen dem Kondensator und dem Expansionsventil das flüssige Kältemittel auf eine Temperatur von +10°C bis +30°C, bevorzugt +20°C, abgekühlt wird.

18. Verfahren nach einem oder mehreren der Ansprüche 1 bis 17, dadurch gekennzeichnet, daß das dem oder den abzutauenden Wärmetauschern zugeführte heiße, gasförmige Kältemittel so geregelt wird, daß das aus dem oder den abzutauenden Wärmetauschern austretende Kältemittel eine Temperatur von +5°C bis +15°C, bevorzugt +10° C, aufweist.

19. Verfahren nach einem oder mehreren der Ansprüche 1 bis 18, dadurch gekennzeichnet, daß das gasförmige Kältemittel beim Austritt aus dem das angesaugte Gas abkühlenden Wärmetauscher zwischen 10% und 50%, bevorzugt um 20%, überhitzt ist.

20. Verfahren nach einem oder mehreren der Ansprüche 1 bis 19, dadurch gekennzeichnet, daß der Leitungsquerschnitt der Kältemittelleitungen im Wärmetauscher und die Leitungslängen der Kältemittelleitungen in einem Wärmetauscher zwischen dem Expansionsventil und der Saugleitung gleich groß sind und ein Druckverlust des Kältemittels im Wärmetauscher von ca. 1 bis 1,1 m Wassersäule auftritt.

21. Verfahren nach einem oder mehreren der Ansprüche 1 bis 20, dadurch gekennzeichnet, daß eine Temperaturdifferenz des Gases zwischen dem Eintritt in und dem Austritt aus dem Kältetrockner auch bei wechselnden Temperaturen des Gases am Eintritt zum Kältetrockner gleich groß ist.

22. Vorrichtung zum Kühlen von Gasen, insbesondere einer durch einen Verdichter (4) angesaugten Luft, in einer Druckluftanlage, die zwei parallel zueinander verlaufende Kühlstrecken mit Kältetrocknern (5,6) für das Gas aufweist und jeweils zumindest einen Wärmetauscher (15, 16, 95, 96, 111-117) beinhaltet, der in einen Kältemittelkreislauf angeordnet ist, in welchem das verdichtete Kältemittel von einem Kältemittelverdichter (23) über einen Kondensator und ein Expansionsventil (27, 28, 125-131) an einer den Einlaß des Wärmetauschers bildenden Anschlußleitung (17, 18) anliegt und dessen Saugleitung (19, 20, 132-138) gegebenenfalls über einen Wärmetauscher zur Wärmeaufnahme mit einem Saugeingang des Kältemittelverdichters verbunden ist, wobei jeder der Wärmetauscher über ein eigenes Expansionsventil mit der Druckleitung des Kältemittels nach dem Kondensator verbunden ist und zwischen dem Kondensator und dem Expansionsventil sowie dem Wärmetauscher und der Saugleitung des Kältemittelverdichters Magnetventile (21, 139-145), angeordnet sind, deren Antriebe mit einer Steuervorrichtung verbunden sind, dadurch gekennzeichnet, daß jede Saugleitung (19, 20, 132 bis 138) zwischen dem Wärmetauscher (15, 16, 95, 96, 111 bis 117) und dem Magnetventil (21, 139 bis 145) über eine Rückleitung (38, 39, 160 bis 173) unter Zwischenschaltung eines in Richtung der Saugleitung (19, 20, 132 bis 138) wirksamen Rückschlagventiles (40, 41, 174 bis 180) mit der Anschlußleitung (17, 18) zwischen dem Expansionsventil (27, 28, 125 bis 131) und dem Wärmetauscher (15, 16, 95, 96, 111 bis 117) oder über ein Venturiventil (188, 189) zwischen dem Kondensator (59) und dem Expansionsventil (27, 28, 125 bis 131) mit der Druckleitung (25, 26, 66) verbunden ist und daß das Expansionsventil (27, 28, 125 bis 131) zu einer Veränderung der Durchlaßmenge des Kältemittels (68) zum Wärmetauscher (15, 16, 95, 96, 111 bis 117) derartig beaufschlagt ist, daß der über die Druckleitung (52, 53) in der Saugleitung (19, 20, 132 bis 138) überwachte Druck des Kältemittels (68) einem Soll-Druck entspricht und gleichzeitig die mit dem Temperaturfühler (54, 55) überwachte Temperatur höher ist, als die dem Soll-Druck entsprechende Soll-Temperatur.

23. Vorrichtung nach Anspruch 22, dadurch gekennzeichnet, daß die Saugleitung (19, 20, 132 bis 138) über eine Druckleitung (52, 53) mit einem Drucksensor (50, 51) und mit einem Temperaturfühler (54, 55) versehen ist.

24. Vorrichtung nach Anspruch 23, dadurch gekennzeichnet, daß der Temperaturfühler (54, 55) und/oder der Drucksensor (50, 51) mit dem Expansionsventil (27, 28, 125 bis 131) zusammengeschaltet ist.

25. Vorrichtung nach einem oder mehreren der Ansprüche 22 bis 24, dadurch gekennzeichnet, daß das Expansionsventil (27, 28, 125 bis 131) eine verstärkte Expansion des Kältemittels (68) bewirkt, wenn bei vorhandenem Soll-Druck die Ist-Temperatur über eine oberhalb der dem Soll-Druck entsprechenden Soll-Temperatur liegenden Plan-Temperatur ansteigt.

26. Vorrichtung nach einem oder mehreren der Ansprüche 22 bis 25, dadurch gekennzeichnet, daß die Temperatur des aus dem oder den zum Abtauen beaufschlagten Wärmetauschern (15, 16, 95, 96, 111 bis 117) austretenden Kältemittels (68) höher als +5°C ist.

27. Vorrichtung nach einem oder mehreren der Ansprüche 22 bis 26, dadurch gekennzeichnet, daß jeder Kältetrockner (5, 6) in einer Klimazone (109) und einer Kältezone (110) jeweils zumindest einen Wärmetauscher (15, 16, 95, 96, 111 bis 117) aufweist.

28. Vorrichtung nach einem oder mehreren der Ansprüche 22 bis 27, dadurch gekennzeichnet, daß jeder Wärmetauscher (15, 16, 95, 96, 111 bis 117) mehrere parallel zueinander verlaufende Kältemittelleitungen (181 bis 187) aufweist und daß die Kältemittelleitungen (181 bis 187) zwischen dem Expansionsventil (27, 28, 125 bis 131) und der Saugleitung (19, 20, 132 bis 138) alle eine gleiche Länge und einen gleichen Querschnitt aufweisen.

29. Vorrichtung nach Anspruch 27, dadurch gekennzeichnet, daß die Klimazone (109) und die Kältezone (110) jeweils mehrere zueinander parallel geschaltete Wärmetauscher (15, 16, 95, 96, 111 bis 117) mit je einem eigenen Expansionsventil (27, 28, 125 bis 131) aufweisen und von dem diesen gemeinsamen Kältemittelverdichter (23) angespeist sind.

## Claims

1. Method of cooling gases, in particular air drawn through at least one compressor in a compressed-air system, wherein the gas circulates alternately through at least one of a plurality of refrigeration evaporators, equipped with heat exchangers through which refrigerant is circulated, and is cooled to below 0°C in a cooling section by means of a heat exchanger through which a refrigerant is circulated and, as the gas is cooled by at least one of the refrigeration evaporators, the ice formed by the condensate precipitated from the indrawn gas in the or the other refrigeration evaporator(s) is thawed by feeding in a hot refrigerant vapour which flows through the heat exchanger in the refrigeration evaporator, wherein the hot, gaseous refrigerant vapour liquefies as it passes through the refrigeration evaporator or evaporators to be thawed and the liquid refrigerant is returned to the refrigerant circuit, characterised in that the liquid refrigerant leaving the refrigeration evaporator or evaporators to be thawed is sucked in by means of a vacuum pressure generated in a Venturi valve with a liquid refrigerant flowing from a condenser to an expansion valve or is admixed with the expanded, gaseous refrigerant between the expansion valve and a heat exchanger provided in the circuit for chilling the indrawn gas, wherein an actual temperature and an actual pressure of the refrigerant leaving the heat exchanger used to cool the indrawn gas are detected and compared with a desired temperature and a desired pressure of the refrigerant, wherein as it flows through the heat exchanger provided in the refrigeration evaporator to chill the indrawn gas the refrigerant is chilled only until the actual temperature thereof at the desired pressure at the output from the heat exchanger is higher than the temperature corresponding to the desired pressure.

2. Method as claimed in claim 1, characterised in that the actual temperature and/or the actual pressure of the gas sucked in by the compressor is detected and is compared with the desired temperature and/or the desired pressure of the gas and the quantity of refrigerant circulating through the expansion valve to the heat exchanger is regulated in order to eliminate the difference between the desired and actual temperature and/or the actual and desired pressure.

3. Method as claimed in one of claims I or 2, characterised in that the quantity of refrigerant flowing through the expansion valve is increased if the actual temperature of the indrawn gas is too low.

4. Method as claimed in one or more of claims I to 3, characterised in that a pressure of the refrigerant in a return line is higher than a pressure of the refrigerant in a feeder line.

5. Method as claimed in one or more of claims 1 to 4, characterised in that a quantity of hot, liquid refrigerant delivered to a bypass line of a refrigerant compressor is less than 50 %, preferably less than 20 % of the total quantity delivered to the refrigerant compressor.

6. Method as claimed in one or more of claims 1 to 5, characterised in that the refrigerant from the heat exchanger(s) to be thawed is fed into the pressure line between the condenser and the expansion valve.

7. Method as claimed in one or more of claims 1 to 6, characterised in that the liquid refrigerant fed out from the heat exchanger(s) to be thawed is fed via a return line into a pressure line in a region at which the pressure of the liquid refrigerant is the same as or lower than that of the refrigerant leaving the heat exchanger(s) to be thawed.

8. Method as claimed in one or more of claims 1 to 7, characterised in that the gas sucked in by the compressor is fed through two heat exchangers disposed one after another in the direction of flow.

9. Method as claimed in claim 8, characterised in that, as it passes through the first heat exchanger, preferably forming an air-conditioning zone, with an intake temperature of the gas of + 20 °C, the gas is cooled to a temperature the same as or higher than - 10 °C, preferably higher than + 2 °C, and in that the gas drawn into the heat exchanger arranged thereafter is cooled to a temperature of below - 10 °C, preferably below -30 °C.

10. Method as claimed in claim 9, characterised in that the gas drawn into the air-conditioning zone is only cooled until the condensate generated remains liquid.

11. Method as claimed in one or more of claims 1 to 10, characterised in that the refrigerant between the expansion valve and the suction line is fed through the heat exchanger in several part-flows.

12. Method as claimed in claim 11, characterised in that the pressure in each part-flow of the refrigerant is set or regulated by means of a separate expansion valve.

13. Method as claimed in one or more of claims 1 to 12, characterised in that different, preferably several refrigerant compressors are preferably assigned to the heat exchangers in the air-conditioning zone and the chilling zone

14. Method as claimed in one or more of claims 1 to 13, characterised in that hot, gaseous refrigerant is fed to the heat exchangers of the air-conditioning zone and/or the chilling zone during the thawing process.

15. Method as claimed in one or more of claims 1 to 14, characterised in that the refrigerant, e.g. R22, is at a pressure of 13.5 bar and is heated to a temperature of +70 °C to +105 °C, preferably +80 °C to +90 °C.

16. Method as claimed in one or more of claims 1 to 15, characterised in that the gaseous refrigerant is cooled in the condenser to a temperature of between +25 °C and +60 °C, preferably +30 °C, so that the refrigerant is liquefied.

17. Method as claimed in one or more of claims 1 to 16, characterised in that the liquid refrigerant is cooled to a temperature of +10 °C to +30 °C, preferably +20 °C in a heat exchanger between the condenser and the expansion valve.

18. Method as claimed in one or more of claims 1 to 17, characterised in that the hot gaseous refrigerant delivered to the heat exchanger(s) to be thawed is regulated so that the refrigerant leaving the heat exchanger(s) to be thawed is at a temperature of +5 °C to +15 °C, preferably +10 °C.

19. Method as claimed in one or more of claims 1 to 18, characterised in that, as it leaves the heat exchanger cooling the indrawn gas, the gaseous refrigerant is superheated between 10 % and 50 %, preferably by 20 %.

20. Method as claimed in one or more of claims 1 to 19, characterised in that the line cross section of the refrigerant lines in the heat exchanger and the line lengths of the refrigerant lines in a heat exchanger between the expansion valve and the suction line are of the same size and the refrigerant in the heat exchanger is subjected to a pressure loss of approximately 1 to 1,1 m head of water.

21. Method as claimed in one or more of claims I to 20, characterised in that a temperature difference of the gas between the inlet to and outlet from the refrigeration evaporator is the same, even in the event of changing temperatures of the gas at the inlet to the refrigeration evaporator.

22. Device for cooling gases, in particular air drawn through a compressor (4) in a compressed-air system having two cooling runs extending parallel with one another with refrigeration evaporators (5, 6) for the gas, each containing at least one heat exchanger (15, 16, 95, 96, 111 to 117) arranged in a refrigerant circuit, in which the compressed refrigerant of a refrigerant compressor (23) communicates via a condenser and an expansion valve (27, 28, 125 to 131) with a feeder line (17, 18) forming the inlet of the heat exchanger and its suction line (19, 20, 132 to 138) is optionally connected, via a heat exchanger for absorbing heat, to a suction inlet of the refrigerant compressor, each of the heat exchangers being connected by a separate expansion valve to the pressure line of the refrigerant downstream of the condenser, and solenoid valves (21, 139 to 145) are arranged between the condenser and the expansion valve as well as the heat exchanger and the suction line of the refrigerant compressor, the drives of which are connected to a control device, characterised in that each suction line (19, 20, 132 to 138) between the heat exchanger (15, 16, 95, 96, 111 to 117) and the solenoid valve (21, 139 to 145) is connected, via a return line (38, 39, 160 to 173) having an inter-connected check valve (40, 41, 174 to 180) acting in the direction of the suction line (19, 20, 132 to 138), to the feeder line (17, 18) between the expansion valve (27, 28, 125 to 131) and the heat exchanger (15, 16, 95, 96, 111 to 117) or, via a Venturi valve (188, 189) between the condenser (59) and the expansion valve (27, 28, 125 to 131), to the pressure line (25, 26, 66) and, in order to vary the quantity of refrigerant (68) fed to the heat exchanger (15, 16, 95, 96, 111 to 117), the expansion valve (27, 28, 125 to 131) is pressurised so that the pressure of the refrigerant (68), monitored via the pressure line (52, 53), in the suction line (19, 20, 132 to 138) corresponds to a desired pressure and the temperature monitored by the temperature sensor (54, 55) is simultaneously higher than the desired temperature corresponding to the desired pressure.

23. Device as claimed in claim 22, characterised in that the suction line (19, 20, 132 to 138) is provided via a pressure line (52, 53) with a pressure sensor (50, 51) and with a temperature sensor (54, 55).

24. Device as claimed in claim 23, characterised in that the temperature sensor (54, 55) and/or the pressure sensor (50, 51) is inter-connected with the expansion valve (27, 28, 125 to 131).

25. Device as claimed in one or more of claims 22 to 24, characterised in that the expansion valve (27, 28, 125 to 131) causes a greater expansion of the refrigerant (68) if the actual temperature at the desired pressure rises above a planned temperature in excess of the desired temperature corresponding to the desired pressure.

26. Device as claimed in one or more of claims 22 to 25, characterised in that the temperature of the refrigerant (68) leaving the pressurised heat exchanger(s) to be thawed (15, 16, 95, 96, 111 to 117) is higher than +5 °C.

27. Device as claimed in one or more of claims 22 to 26, characterised in that each refrigeration evaporator (5, 6) in an air-conditioning zone (109) and a chilling zone (110) has at least one respective heat exchanger (15, 16, 95, 96, 111 to 117).

28. Device as claimed in one or more of claims 22 to 27, characterised in that each heat exchanger (15, 16, 95, 95, 111 to 117) has a plurality of refrigerant lines (181 to 187) running parallel with one another and in that the refrigerant lines (181 to 187) all have a same length and a same cross section between the expansion valve (27, 28, 125 to 131) and the suction line (19, 20, 132 to 138).

29. Device as claimed in claim 27, characterised in that the air-conditioning zone (109) and the chilling zone (110) respectively have a plurality of heat exchangers (15, 16, 95, 96, 111 to 117) connected in parallel with one another, each having a separate expansion valve (27, 28, 125 to 131) and are supplied by the refrigerant condenser (23) common thereto.

## Revendications

1. Procédé de refroidissement de gaz, notamment d'un air aspiré par au moins un compresseur, dans une installation d'air comprimé, où le gaz s'écoule alternativement à travers au moins un séchoir froid équipé de plusieurs échangeurs de chaleur traversés par un fluide frigorigène et est refroidi à moins 0°C dans un parcours de refroidissement, au moyen d'un échangeur de chaleur à travers lequel s'écoule un fluide frigorigène, et pendant le refroidissement du gaz par au moins l'un des séchoirs froids, dans le ou les séchoirs froids additionnels, par l'amenée d'une vapeur de fluide frigorigène chaude, qui passe à travers l'échangeur de chaleur dans le séchoir froid, la glace qui est produite par le condensat éliminé du gaz aspiré, est amenée à fondre, où la vapeur de fluide frigorigène chaude, en forme de gaz, lors du passage à travers le ou les séchoirs froids à dégivrer, est rendue liquide, et le fluide frigorigène liquide est ramené dans le circuit de fluide frigorigène, caractérisé en ce que le fluide frigorigène liquide sortant du ou des séchoirs froids à dégivrer est aspiré par une dépression produite dans une vanne Venturi par un fluide frigorigène liquide s'écoulant d'un condensateur à une vanne d'expansion ou bien est ajouté entre la vanne d'expansion et l'échangeur de chaleur commuté pour le refroidissement du gaz aspiré au fluide frigorigène expansé en forme de gaz, où est déterminée une température réelle et une pression réelle du fluide frigorigène utilisée pour le refroidissement du gaz aspiré, sortant de l'échangeur de chaleur et est comparée avec une température de consigne et une pression de consigne du fluide frigorigène, où le fluide frigorigène, lors du passage à travers l'échangeur de chaleur disposé pour le refroidissement du gaz aspiré dans le séchoir froid, est refroidi seulement suffisamment pour que sa température réelle, à la pression de consigne, à la sortie de l'échangeur de chaleur, soit plus élevée que la température correspondant à la pression de consigne.

2. Procédé selon la revendication 1, caractérisé en ce que la température réelle et/ou la pression réelle du gaz aspiré par le compresseur est déterminée et est comparée avec la température de consigne et/ou la pression de consigne du gaz, et en ce qu'il est réglé la quantité du fluide frigorigène s'écoulant à travers la vanne d'expansion à l'échangeur de chaleur pour éliminer la différence entre les températures de consigne et réelle et/ou les pressions réelle et de consigne.

3. Procédé selon l'une des revendications 1 ou 2, caractérisé en ce que la quantité du fluide frigorigène s'écoulant à travers la vanne d'expansion est augmentée dans le cas d'une température réelle trop basse du gaz aspiré.

4. Procédé selon l'une ou plusieurs des revendications 1 à 3, caractérisé en ce qu'une pression du fluide frigorigène dans un conduit de retour est plus élevée qu'une pression du fluide frigorigène dans un conduit de raccordement.

5. Procédé selon l'une ou plusieurs des revendications 1 à 4, caractérisé en ce qu'une quantité en fluide frigorigène chaud, liquide, amenée à un conduit de dérivation d'un compresseur de fluide frigorigène est plus petite que 50%, de préférence plus petite que 20%, de la quantité convoyée totale du compresseur de fluide frigogène.

6. Procédé selon l'une ou plusieurs des revendications 1 à 5, caractérisé en ce que le fluide frigorigène du ou des échangeurs de chaleur à dégivrer est introduit dans le conduit sous pression entre le condensateur et la vanne d'expansion.

7. Procédé selon l'une ou plusieurs des revendications 1 à 6, caractérisé en ce que le fluide frigorigène liquide amené du ou des échangeurs de chaleur à dégivrer par un conduit de retour est introduit dans le conduit sous pression dans la zone où la pression du fluide frigorigène liquide est égale ou plus petite que celle du fluide frigorigène venant du ou des échangeurs de chaleur à dégivrer.

8. Procédé selon l'une ou plusieurs des revendications 1 à 7, caractérisé en ce que le gaz aspiré par le compresseur est amené à passer à travers deux échangeurs de chaleur disposés l'un derrière l'autre dans la direction d'écoulement.

9. Procédé selon la revendication 8, caractérisé en ce que le gaz, lors du passage à travers le premier échangeur de chaleur formant de préférence une zone climatique, lors d'une température d'aspiration du gaz de +20°C, est refroidi à une température égale ou supérieure à -10°C, de préférence supérieure à +2°C, et que par l'échangeur de chaleur disposé en aval, le gaz aspiré est refroidi à une température inférieure à -10°C, de préférence inférieure à -30°C.

10. Procédé selon la revendication 9, caractérisé en ce que le gaz aspiré est refroidi dans la zone climatique seulement suffisamment pour que le condensat produit reste liquide.

11. Procédé selon l'une ou plusieurs des revendications 1 à 10, caractérisé en ce que le fluide frigorigène est amené à passer entre la vanne d'expansion et le conduit d'aspiration en plusieurs flux partiels à travers l'échangeur de chaleur.

12. Procédé selon la revendication 11, caractérisé en ce que la pression dans chaque flux partiel du fluide frigorigène est fixée respectivement réglée par une vanne d'expansion propre.

13. Procédé selon l'une ou plusieurs des revendications 1 à 12, caractérisé en ce que sont associés aux échangeurs de chaleur dans la zone climatique et la zone de froid, différents, de préférence plusieurs, compresseurs de fluide frigorigène.

14. Procédé selon l'une ou plusieurs des revendications 1 à 13, caractérisé en ce que les échangeurs de chaleur de la zone climatique et/ou de la zone de froid, pendant l'opération de dégivrage, sont alimentés en fluide frigorigène gazeux et chaud.

15. Procédé selon l'une ou plusieurs des revendications 1 à 14, caractérisé en ce que le fluide frigorigène est chauffé, par exemple à R22 à une pression de 13,5 bar et à une température de +70°C à +105°C, de préférence +80°C à +90°C.

16. Procédé selon l'une ou plusieurs des revendications 1 à 15, caractérisé en ce que par le refroidissement du fluide frigorigène gazeux dans le condensateur à une température entre +25°C et +60°C, de préférence +30°C, le fluide frigorigène est liquéfié.

17. Procédé selon l'une ou plusieurs des revendications 1 à 16, caractérisé en ce que dans un échangeur de chaleur entre le condensateur et la vanne d'expansion, le fluide frigorigène liquide est refroidi à une température de +10°C à +30°C, de préférence à +20°C.

18. Procédé selon l'une ou plusieurs des revendications 1 à 17, caractérisé en ce que le fluide frigorigène gazeux et chaud amené à ou aux échangeurs de chaleur à dégivrer est réglé de façon que le fluide frigorigène sortant du ou des échangeurs de chaleur à dégivrer présente une température de +5°C à +15°C, de préférence de +10°C.

19. Procédé selon l'une ou plusieurs des revendications 1 à 18, caractérisé en ce que le fluide frigorigène gazeux, lors de la sortie de l'échangeur de chaleur refroidissant le gaz aspiré, est surchauffé entre 10% et 50%, de préférence de 20%.

20. Procédé selon l'une ou plusieurs des revendications 1 à 19, caractérisé en ce que la section transversale des conduites de fluide frigorigène dans l'échangeur de chaleur et les longueurs des conduites de fluide frigorigène dans un échangeur de chaleur entre la vanne d'expansion et le conduit d'aspiration sont de même grandeur, et qu'il se produit une perte de pression du fluide frigorigène dans l'échangeur de chaleur d'environ 1 à 1,1 m colonne d'eau.

21. Procédé selon l'une ou plusieurs des revendications 1 à 20, caractérisé en ce qu'une différence de température du gaz, entre l'entrée dans et la sortie du séchoir froid, est de même grandeur également dans le cas de températures changeantes du gaz à l'entrée du séchoir froid.

22. Dispositif de refroidissement de gaz, notamment d'un air aspiré par un compresseur (4), dans une installation à air comprimé, qui présente deux parcours de refroidissement s'étendant parallèlement l'un à l'autre avec des séchoirs froids (5, 6) pour le gaz et contient respectivement au moins un échangeur de chaleur (15, 16, 95, 96, 111 à 117) qui est disposé dans un circuit de fluide frigorigène où le fluide frigorigène comprimé d'un compresseur de fluide frigorigène (23) par un condensateur et une vanne d'expansion (27, 28, 125 à 131) s'applique à un conduit de raccordement (17, 18), formant l'entrée de l'échangeur de chaleur, et dont le conduit d'aspiration (19, 20, 132 à 138) est relié le cas échéant par un échangeur de chaleur pour l'absorption de chaleur à une entrée d'aspiration du compresseur de fluide frigorigène, où chacun des échangeurs de chaleur est relié par une vanne d'expansion propre au conduit sous pression du fluide frigorigène en aval du condensateur et où sont disposées entre le condensateur et la vanne d'expansion et entre l'échangeur de chaleur et le conduit d'aspiration du compresseur de fluide frigorigène des vannes à aimant (21, 139 à 145) dont les entraînements sont reliés à un dispositif de commande, caractérisé en ce que chaque conduit d'aspiration (19, 20, 132 à 138) entre l'échangeur de chaleur (15, 16, 95, 96, 111, 117) et la vanne à aimant (21, 139 à 145) est relié par un conduit de retour (38, 39, 160 à 173), en intercalant un clapet de non-retour (40, 41, 174 à 180) agissant dans la direction du conduit d'aspiration (19, 20, 132 à 138) au conduit de raccordement (17, 18) entre la vanne d'expansion (27, 28, 125 à 131) et l'échangeur de chaleur (15, 16, 95, 96, 111 à 117) ou par une vanne Venturi (188, 189) entre le condensateur (59) et la vanne d'expansion (27, 28, 125 à 131) au conduit sous pression (25, 26, 66), et en ce que la vanne d'expansion (27, 28, 125 à 131), pour modifier le débit du fluide frigorigène (68) à l'échangeur de chaleur (15, 16, 95, 96, 111 à 117) est sollicité de façon que la pression du fluide frigorigène (68) surveillée par le conduit sous pression (52, 53) dans le conduit d'aspiration (19, 20, 132 à 138) corresponde à une pression de consigne et qu'en même temps, la température surveillée par le capteur de température (54, 55) soit plus élevée que la température de consigne correspondant à la pression de consigne.

23. Dispositif selon la revendication 22, caractérisé en ce que le conduit d'aspiration (19, 20, 132 à 138) est muni par un conduit sous pression (52, 53) d'un capteur de pression (50, 51) et d'un capteur de température (54, 55).

24. Dispositif selon la revendication 23, caractérisé en ce que le capteur de température (54, 55) et/ou le capteur de pression (50, 51) est commuté ensemble avec la vanne d'expansion (27, 28, 125 à 131).

25. Dispositif selon l'une ou plusieurs des revendications 22 à 24, caractérisé en ce que la vanne d'expansion (27, 28, 125 à 131) provoque une plus forte expansion du fluide frigorigène (68) lorsque lors d'une pression de consigne présente, la température réelle augmente au-delà d'une température planifiée située au-dessus de la température de consigne correspondant à la pression de consigne.

26. Dispositif selon l'une ou plusieurs des revendications 22 à 25, caractérisé en ce que la température du fluide frigorigène (58) sortant du ou des échangeurs de chaleur (15, 16, 95, 96, 111 à 117) sollicités pour le dégivrage est plus élevée que +5°C.

27. Dispositif selon l'une ou plusieurs des revendications 22 à 26, caractérisé en ce que chaque séchoir froid (5, 6) présente dans une zone climatique (109) et une zone froide (110) respectivement au moins un échangeur de chaleur (15, 16, 95, 96, 111 à 117).

28. Dispositif selon l'une ou plusieurs des revendications 22 à 27, caractérisé en ce que chaque échangeur de chaleur (15, 16, 95, 96, 111 à 117), présente plusieurs conduites de fluide frigorigène (181 à 187) s'étendant parallèlement les unes aux autres, et en ce que les conduites de fluide frigorigène (181 à 187), entre la vanne d'expansion (27, 28, 125 à 131) et le conduit d'aspiration (19, 20, 132 à 138) présentent toutes une même longueur et une même section transversale.

29. Dispositif selon la revendication 27, caractérisé en ce que la zone climatique (109) et la zone froide (110) présentent respectivement plusieurs échangeurs de chaleur (15, 16, 95, 96, 111 à 117) commutés parallèlement les uns aux autres, chacun avec une vanne d'expansion propre (27, 28, 125 à 131) et sont alimentés par le compresseur de fluide frigorigène (23) commun à ceux-ci.
